# EUROPEAN PATENT APPLICATION

(11) **EP 4 707 915 A1**
(43) Date of publication of application: **11.03.2026**
(21) Application number: 24797277.1
(22) Date of filing: 18.03.2024
(51) Int. Cl.: G03B 5/04, G03B 5/06, G03B 3/10, G03B 13/36, G03B 17/12, G02B 7/06, G02B 27/64, H04N 23/54, H04N 23/55, H02K 41/035

(54) **LENS DRIVING DEVICE, CAMERA DEVICE, AND OPTICAL INSTRUMENT**

(30) Priority: 28.04.2023 KR 20230056648
(71) Applicant: LG INNOTEK CO. LTD, Gangseo-gu Seoul 07796 (KR)
(72) Inventor: KIM, Jung Cheol, Seoul 07796 (KR); KIM, Tae Wan, Seoul 07796 (KR); LEE, Sung Guk, Seoul 07796 (KR)
(74) Representative: DREISS Patentanwälte PartG mbB
(86) International application number: PCT/KR2024/003376
(87) International publication number: WO 2024/225615

(57) **Abstract**

The present embodiment relates to a lens driving device comprising: a base; a first carrier disposed on the base; a second carrier disposed on the first carrier; a third carrier disposed on the second carrier; a first driver that moves the first carrier in a first direction perpendicular to an optical axis direction; a second driver that moves the second carrier in a second direction perpendicular to the optical axis direction and the first direction; a third driver that moves the third carrier in the optical axis direction; an attraction magnet disposed on the second carrier; and a first yoke disposed on the base, wherein the first yoke is disposed at a position corresponding to the attraction magnet so that an attraction force acts on the attraction magnet, and the third driver includes a third magnet disposed on the third carrier and a third coil disposed on the second carrier.

## Description

### [Technical Field]

The teachings in accordance with exemplary and non-limiting embodiments of the present invention relate generally to a lens driving device, a camera device and an optical instrument.

### [Background Arts]

Camera devices are apparatus that capture subjects as photographs or videos, and are mounted on optical devices such as smartphones, drones, and vehicles.

Camera devices incorporate an autofocus function that automatically adjusts focus according to the subject's distance. Furthermore, they incorporate an optical image stabilization function that prevents focus blur caused by the user's hand shake.

However, the arrangement of components such as magnets and coils required to perform the autofocus and optical image stabilization functions necessitates a size larger than the smartphone's thickness along the optical axis. This disadvantageously results in the camera device mounted on the smartphone protruding more than other parts of the device.
(Patent Document 1) KR 10-2015-0118005 A

### [Detailed Description of the Invention]

### [Technical Subject]

The present embodiment seeks to provide a camera device that, despite incorporation of autofocus and optical image stabilization functions, minimizes its size along the optical axis.

Furthermore, it aims to provide a camera device capable of accommodating a large-aperture lens.

### [Technical Solution]

A lens driving device according to one embodiment of the present invention may comprise: a base; a first carrier disposed on the base; a second carrier disposed on the first carrier; a third carrier disposed on the second carrier; a first driving unit that moves the first carrier in a first direction perpendicular to an optical axis direction; a second driving unit that moves the second carrier in a second direction perpendicular to the optical axis direction and the first direction; a third driving unit that moves the third carrier in the optical axis direction; an attraction magnet disposed on the second carrier; and a first yoke disposed on the base, wherein the first yoke is disposed at a position corresponding to the attraction magnet so that an attraction force acts on the attraction magnet, and the third driving unit comprises a third magnet disposed on the third carrier and a third coil disposed on the second carrier.

Preferably but not necessarily, the first driving unit may comprise a first magnet disposed on the first carrier and a first coil interacting with the first magnet, a second yoke, with which the first magnet exerts an attractive force, may be disposed on the base, and the second yoke may comprise a plurality of yokes spaced apart from one another.

Preferably but not necessarily, the second driving unit may comprise a second magnet disposed on the second carrier and a second coil interacting with the second magnet, a third yoke, with which the second magnet exerts an attractive force, may be disposed on the base, and the third yoke may comprise a plurality of yokes spaced apart from one another.

Preferably but not necessarily, the second carrier and the base may be connected by a substrate, and the third coil may be disposed on the substrate.

Preferably but not necessarily, the substrate may comprise an outer portion disposed on the base, an inner portion disposed on the second carrier, and a connecting portion connecting the outer portion and the inner portion, wherein the connecting portion may comprise a bent configuration.

Preferably but not necessarily, the connecting portion may be bent once.

Preferably but not necessarily, the third coil may move together with the second carrier.

Preferably but not necessarily, the first carrier, the second carrier and the third carrier may move together when the first carrier moves in the first direction, the first carrier.

Preferably but not necessarily, the second carrier and the third carrier may move together when the second carrier moves in the second direction; and the distance between the third magnet and the third coil may be maintained when the second carrier moves in the first direction and the second direction.

Preferably but not necessarily, the lens driving device may comprise: a first ball disposed between the base and the first carrier; a second ball disposed between the first carrier and the second carrier; and a third ball disposed between the second carrier and the third carrier.

Preferably but not necessarily, the attraction magnet may overlap with the first yoke in the optical axis direction, and the attraction magnet may not overlap with the coil in the optical axis direction.

A lens driving device according to one embodiment of the present invention may comprise: a base; a first carrier disposed on the base; a second carrier disposed on the first carrier; a first magnet and a first coil for moving the first carrier in a first direction perpendicular to the optical axis direction; a second magnet and a second coil for moving the second carrier in a second direction perpendicular to the optical direction and the first direction; a first yoke with which the first magnet interacts; and a second yoke with which the second magnet interacts, wherein the first magnet may be disposed on the first carrier, and the first yoke may comprise a first-first yoke and a first-second yoke disposed on the base and spaced apart from each other.

Preferably but not necessarily, the second magnet may be disposed on the second carrier, and the second yoke may comprise a second-first yoke and a second-second yoke disposed on the base and spaced apart from one another.

A camera device according to one embodiment of the present invention may comprise: a printed circuit board; an image sensor disposed on the printed circuit board; a lens driving device disposed on the printed circuit board; and a lens coupled to the lens driving device.

An optical instrument according to one embodiment of the present invention may comprise: a main body; a camera device disposed on the main body; and a display disposed on the main body and outputting one or more of the images and pictures captured by the camera device.

### [Advantageous Effects]

Through this embodiment, an autofocus function and an optical image stabilization function can be performed in a camera device of minimized size in the optical axis direction.

The camera device according to this embodiment may not protrude from the smartphone. Alternatively, the camera device according to this embodiment may protrude minimally from the smartphone.

According to this embodiment, the camera device, despite not protruding or protruding minimally from the smartphone, can perform both autofocus and optical image stabilization functions.

Furthermore, through this embodiment, a camera device with a minimized size in the horizontal and vertical directions perpendicular to the optical axis can be provided.

Moreover, the camera device of this embodiment enables the autofocus function and optical image stabilization function to operate normally even when a heavy, large-diameter lens is applied.

Furthermore, the phenomenon of the OIS-x carrier and OIS-y carrier tilting unintentionally can be prevented.

### [Brief Descriptions of Drawings]

FIG. 1 is a perspective view of a lens driving device according to one embodiment of the present invention.
FIG. 2 is a perspective view of a lens driving device viewed from a different direction to FIG. 1 according to one embodiment of the present invention.
FIG. 3 is a sectional view taken along line A-A in FIG. 1.
FIG. 4 is a sectional view taken along line B-B in FIG. 1.
FIG. 5 is a sectional view taken along line C-C in FIG. 1.
FIG. 6 is a sectional view taken along line D-D in FIG. 1.
FIG. 7 is a sectional view taken along line E-E in FIG. 1.
FIG. 8 is a sectional perspective view showing a section of a lens driving device according to one embodiment of the present invention, cut in a direction perpendicular to the optical axis.
FIG. 9 is an exploded perspective view of a lens driving device according to one embodiment of the present invention.
FIG. 10 is an exploded perspective view of a lens driving device according to one embodiment of the present invention, viewed from a different direction to FIG. 9.
FIG. 11 is a plan view illustrating a base and related components of a lens driving device according to one embodiment of the present invention.
FIG. 12 is a plan view of a substrate and OIS coil assembly in an assembled state, as shown in FIG. 11.
FIG. 13 is an enlarged perspective view of a portion of FIG. 12.
FIG. 14 is a perspective view of a state where an OIS-x carrier and related components are assembled in FIG. 12.
FIG. 15 is a partially perspective view of FIG. 14 viewed from a different direction.
FIG. 16 is a bottom perspective view of an OIS-x carrier of a lens driving device according to one embodiment of the present invention.
FIG. 17 is a perspective view showing an OIS-y carrier and related components assembled as shown in FIG. 14.
FIG. 18 is a bottom perspective view of an OIS-y carrier of a lens driving device according to one embodiment of the present invention.
FIG. 19 is a partially perspective view illustrating the attraction magnet and attraction yoke of a lens driving device according to one embodiment of the present invention.
FIG. 20 is a perspective view showing the state of assembly with the substrate in FIG. 17.
FIG. 21 is a perspective view of FIG. 20 seen from another direction.
FIG. 22 is a perspective view of an AF carrier and related components assembled in FIG. 21.
FIG. 23 is a perspective view of FIG. 22 from another angle.
FIG. 24 is a sectional perspective view illustrating the attraction magnet and attraction yoke of a lens driving device according to one embodiment of the present invention.
FIG. 25 is a diagram illustrating (a) the tilt direction of an OIS-x carrier and (b) the tilt direction of an OIS-y carrier that may occur in the absence of an attraction magnet and attraction yoke, to explain the effect of the attraction magnet and attraction yoke in a lens driving device according to one embodiment of the present invention.
FIG. 26 is a perspective view illustrating a magnet, coil, and yoke of a lens driving device according to one embodiment of the present invention.
FIG. 27 is a bottom perspective view of FIG. 26 seen from a different direction.
FIGS. 28 to 30 are drawings illustrating the autofocus drive of a lens driving device according to one embodiment of the present invention.

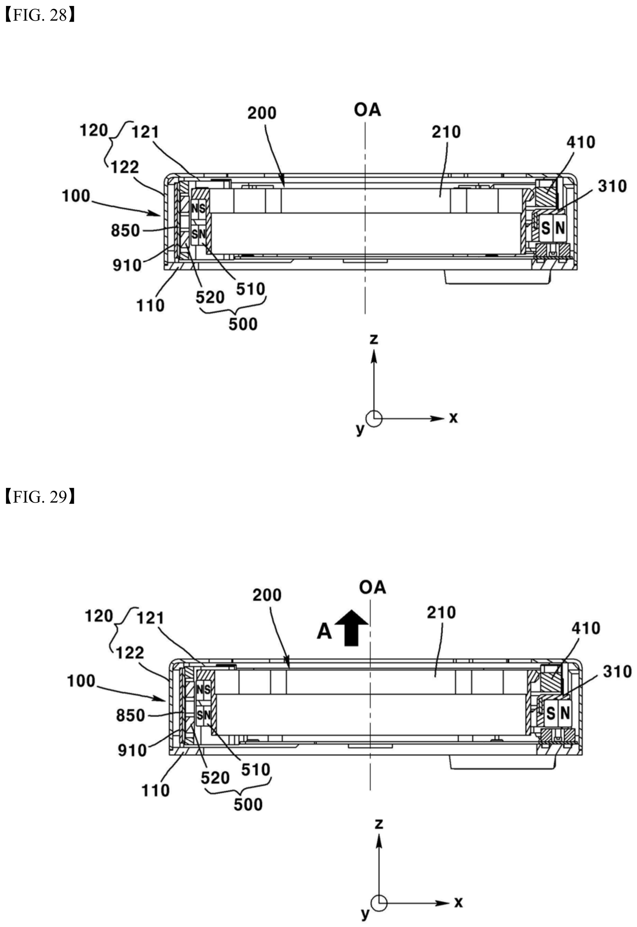

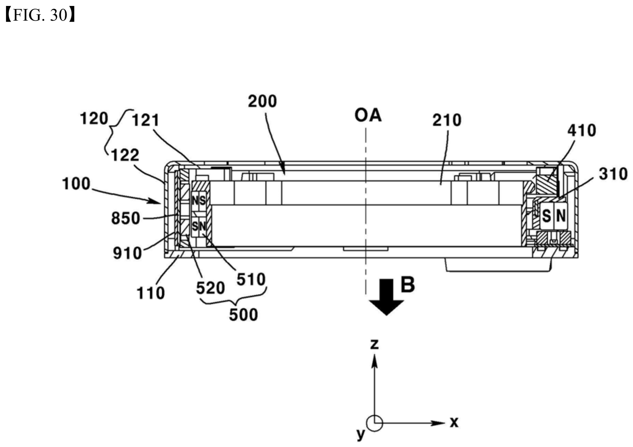

FIG. 28 is a cross-sectional view showing the configuration of an AF moving part in the initial state where no current is applied to an AF coil. FIG. 29 is a cross-sectional view showing the configuration where the AF moving part has moved upwards along the optical axis direction due to a forward current being applied to the AF coil. FIG. 30 is a cross-sectional view showing the configuration where the AF moving part has moved downwards along the optical axis direction due to a reverse current being applied to the AF coil.

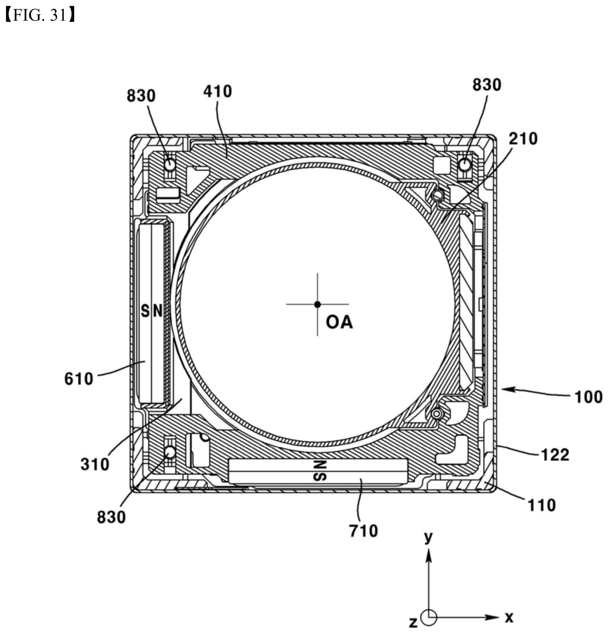

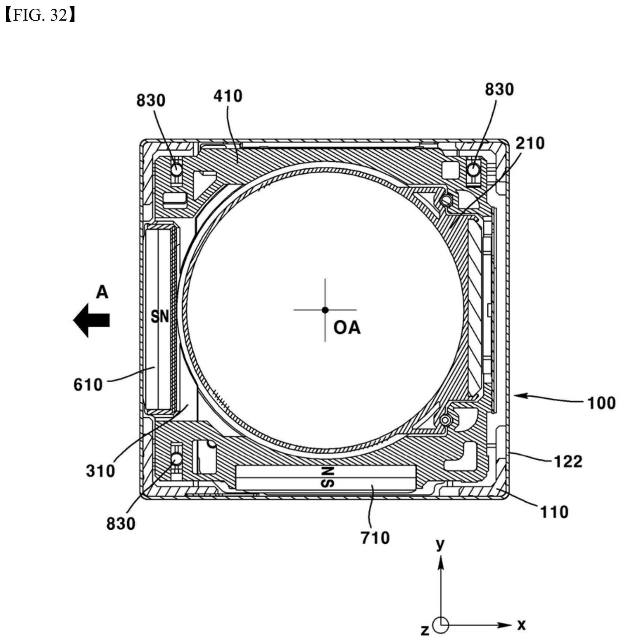

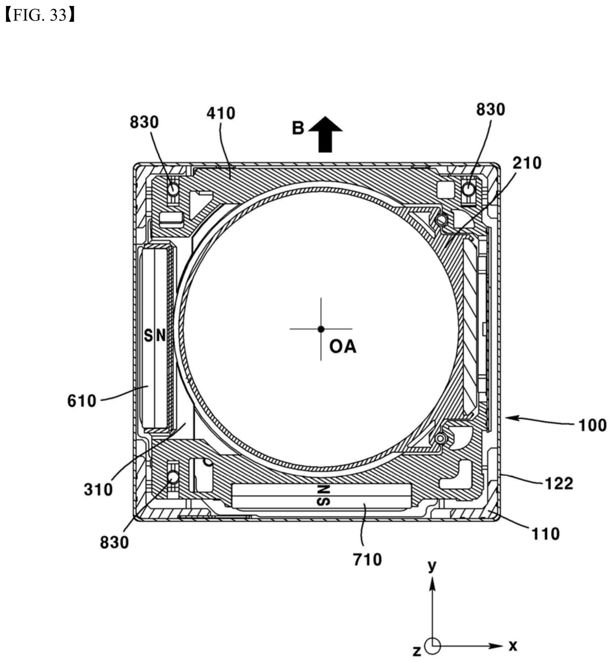

FIGS. 31 to 33 are drawings illustrating an optical image stabilization (handshake correction) drive (operation) of a lens driving device according to one embodiment of the present invention. FIG. 31 is a cross-sectional view showing the configuration of the moving parts in the initial state where no current is applied to an OIS-x coil and OIS-y coil. FIG. 32 is a cross-sectional view showing the state where current is applied to the OIS-x coil, causing the OIS-x moving part, OIS-y moving part, and AF moving part to move in the x-axis direction perpendicular to the optical axis. FIG. 33 is a cross-sectional view showing the state where current is applied to the OIS-y coil, causing the OIS-y moving part and AF moving part to move in the y-axis direction perpendicular to the optical axis.

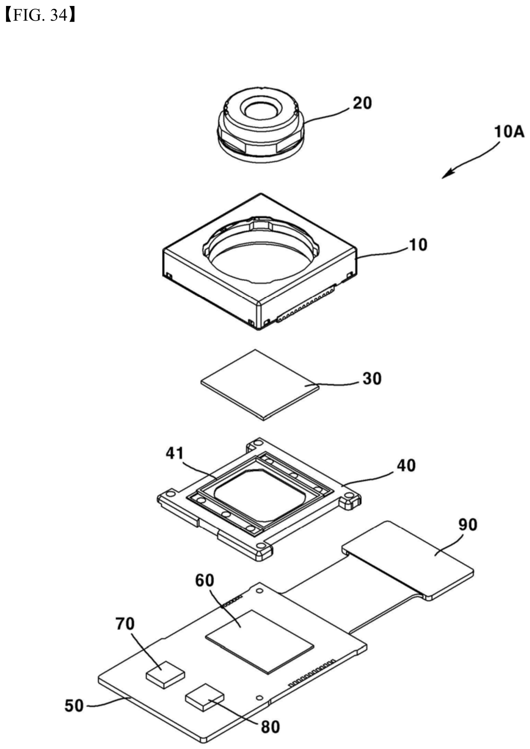

FIG. 34 is an exploded perspective view of a camera device according to one embodiment of the present invention.

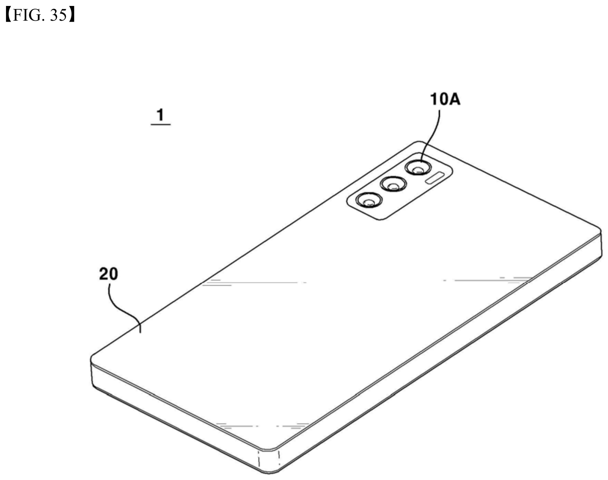

FIG. 35 is a perspective view of an optical instrument according to one embodiment of the present invention.

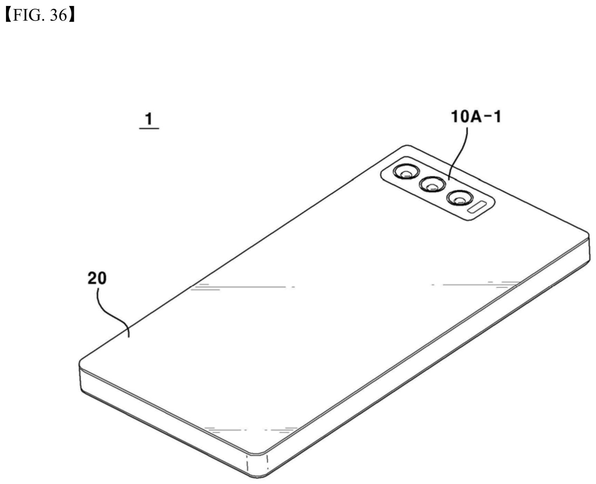

FIG. 36 is a perspective view of an optical instrument according to a modified example.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

In addition, the terms used in the embodiments of the present invention are intended to explain the embodiments and are not intended to limit the invention. In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

The "optical axis direction" (Optical Axis, refer to OA in FIG. 28) used hereinafter is defined as the optical axis direction of the lens and/or image sensor coupled to the lens driving device.

The "vertical direction" used hereinafter may be parallel to or the same as the optical axis direction. The vertical direction may correspond to the "z-axis direction". The "horizontal direction" used hereinafter may be perpendicular to the vertical direction. That is, the horizontal direction may be perpendicular to the optical axis. Therefore, the horizontal direction may include the "x-axis direction" and the "y-axis direction".

The "auto focus (AF) function" used hereinafter is defined as the function that automatically focuses on the subject by adjusting the distance between the lens and the image sensor. This is achieved by moving the lens along the optical axis direction according to the subject's distance, enabling a clear image of the subject to be obtained on the image sensor. Furthermore, "closed-loop auto focus (CLAF) control" is defined as the real-time feedback control of the lens position, achieved by detecting the distance between the image sensor and the lens to enhance the accuracy of focus adjustment.

The "optical image stabilization (OIS) function" used herein is defined as a function that moves or tilts the lens in a direction perpendicular to the optical axis to counteract hand shake, thereby preventing images or videos from becoming blurred due to the user's hand shake. Furthermore, "OIS feedback (closed-loop auto focus) control" is defined as the real-time feedback control of the lens position, achieved by detecting the lens's position relative to the image sensor to enhance the accuracy of the OIS.

Hereinafter, one of the 'AF moving part (200)', 'OIS-x moving part (300)', and 'OIS-y moving part (400)' may be referred to as the 'first moving part', another as the 'second moving part', and the other as the 'third moving part'. Furthermore, the 'moving part' may be referred to as the 'moving body' or 'moving member'.

Hereinafter, one of the 'AF carrier (210)', 'OIS-x carrier (310)' and 'OIS-y carrier (410)' may be referred to as the 'first carrier', another as the 'second carrier', and the other as the 'third carrier'. Furthermore, 'carrier' may be referred to as 'holder', "frame" or 'spacer'.

Hereinafter, the 'AF carrier (210)' may be referred to as the 'bobbin', the 'OIS-x carrier (310)' may be referred to as the "spacer", and the 'OIS-y carrier (410)' may be referred to as the 'housing'.

Hereinafter, one of the 'AF driving part (500)', 'OIS-x driving part (600)', and 'OIS-y driving part (700)' may be referred to as the 'first driving part', another as the 'second driving part', and the other as the 'third driving part'.

Hereinafter, one of the 'AF magnet (510)', 'OIS-x magnet (610)', 'OIS-y magnet (710)', and 'attraction magnet (955)' may be referred to as the 'first magnet', the second as the 'second magnet', the third as the 'third magnet', and the fourth as the 'fourth magnet'. Meanwhile, 'magnet' may be referred to as "magnet", 'magnetic element' or 'permanent magnet'.

Hereinafter, one of the 'AF coil (520)', 'OIS-x coil (620)' and 'OIS-y coil (720)' may be referred to as the 'first coil', another as the 'second coil', and another as the 'third coil'.

Hereinafter, one of the 'AF sensor (530)', 'OIS-x sensor (630)' and 'OIS-y sensor (730)' may be referred to as the 'first sensor', another as the 'second sensor', and the other as the 'third sensor'.

Hereinafter, one of the 'AF guide ball (810)', 'OIS-x guide ball (820)', 'OIS-y guide ball (830)' and 'OIS guide ball (840)' may be referred to as the 'first ball', another as the 'second ball', another as the 'third ball' and another as the 'fourth ball'. Meanwhile, a 'ball' may be referred to as a 'guide ball'. For example, the 'first ball' may be referred to as the 'first guide ball'.

Hereinafter, one of the 'AF yoke (910)', 'OIS-x yoke (920)', 'OIS-y yoke (930)', and 'additional OIS-y yoke (950)' may be referred to as 'first yoke', 'second yoke', 'third yoke', and 'fourth yoke', respectively.

Hereinafter, one of the 'substrate (140)' and 'substrate (850)' may be referred to as the 'first substrate' and the other as the 'second substrate'.

Hereinafter, to distinguish between multiple grooves, they may be referred to as 'first groove', 'second groove', etc.

Hereinafter, one of the 'x-axis direction' and 'y-axis direction' may be referred to as the 'first direction' and the other as the 'second direction'.

Hereinafter, the configuration of the lens driving device according to the present embodiment is described with reference to the drawings.

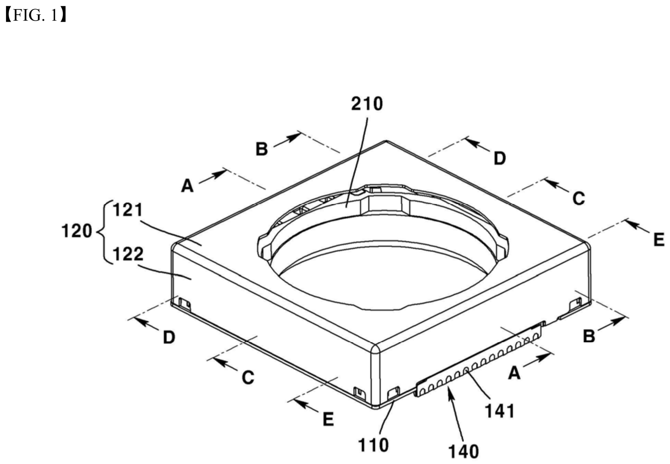

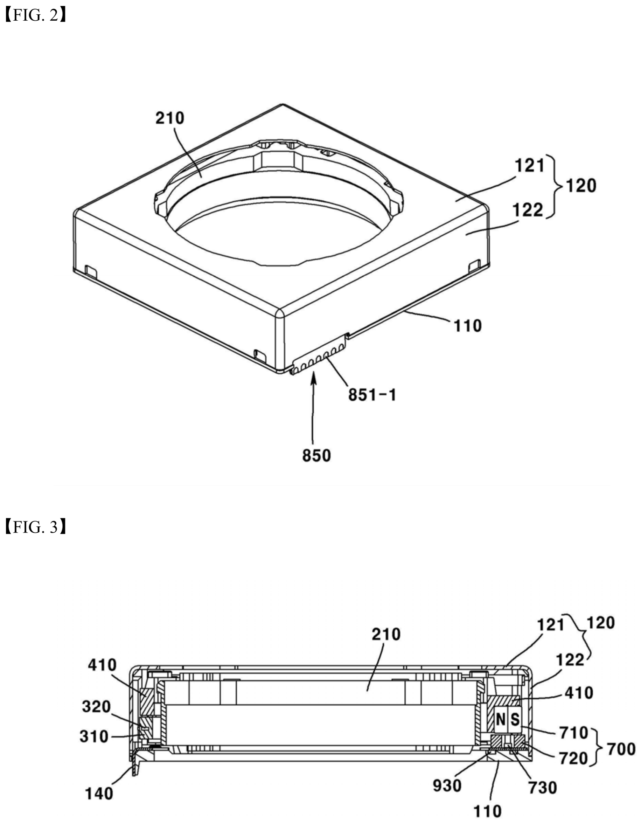

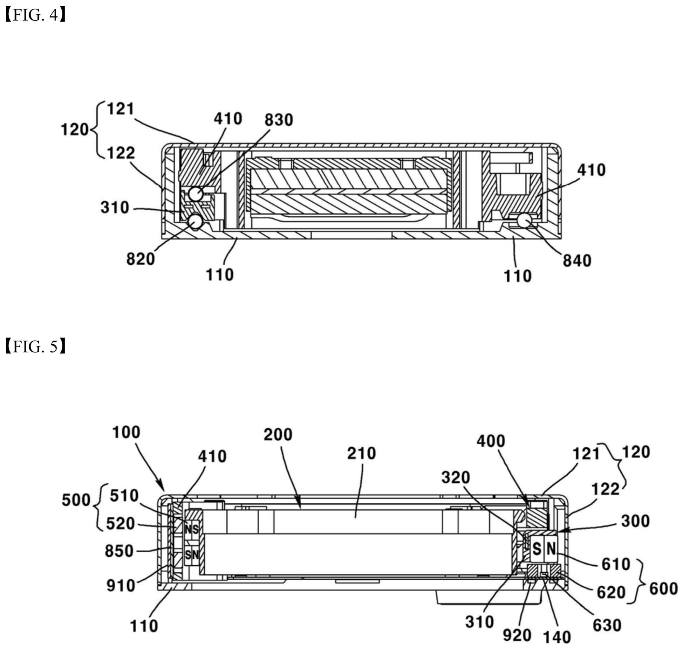

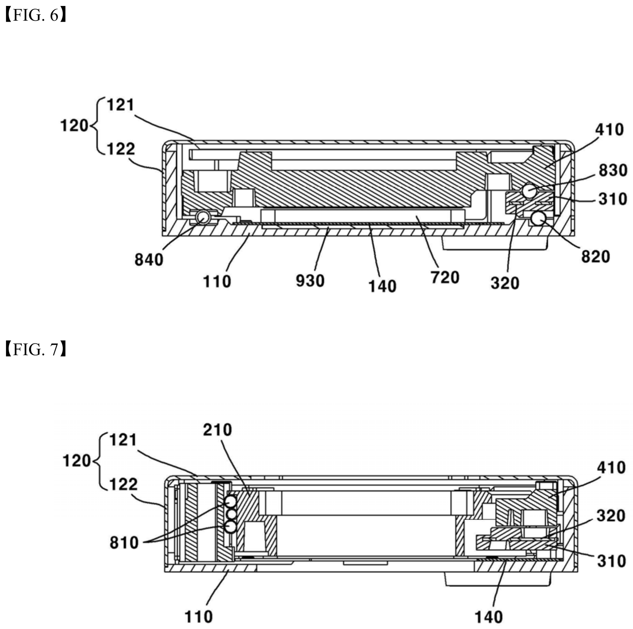

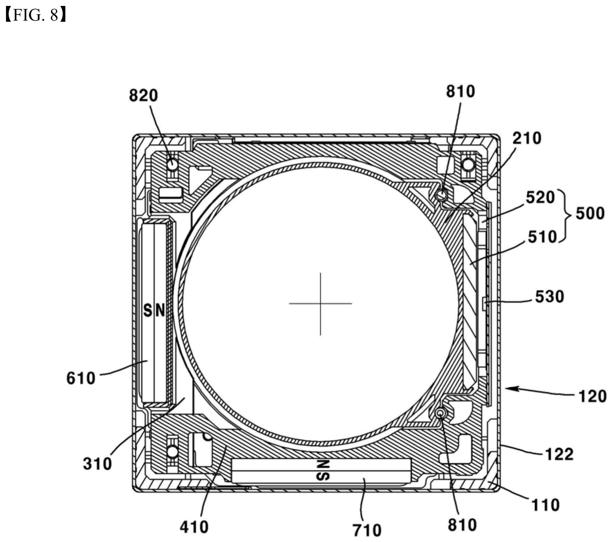

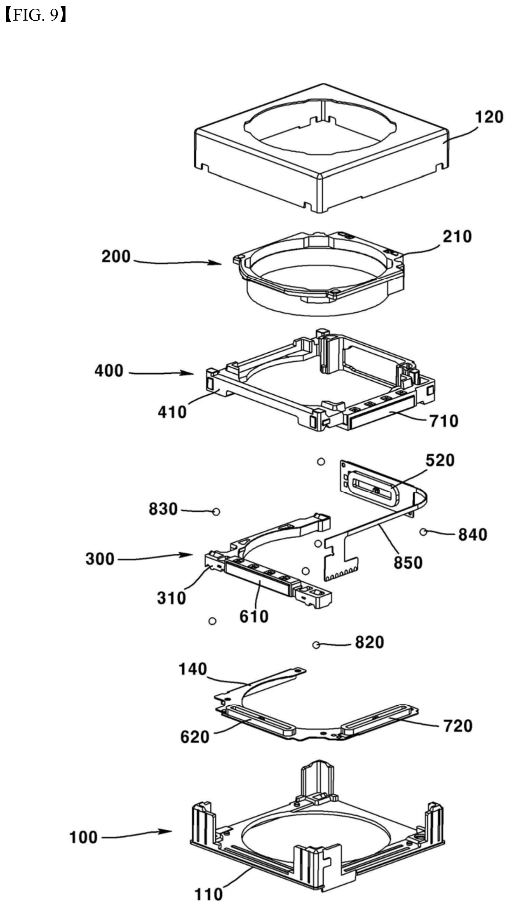

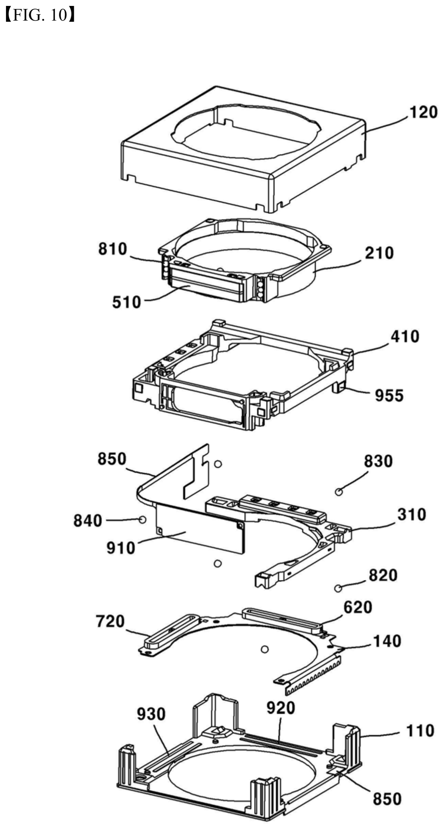

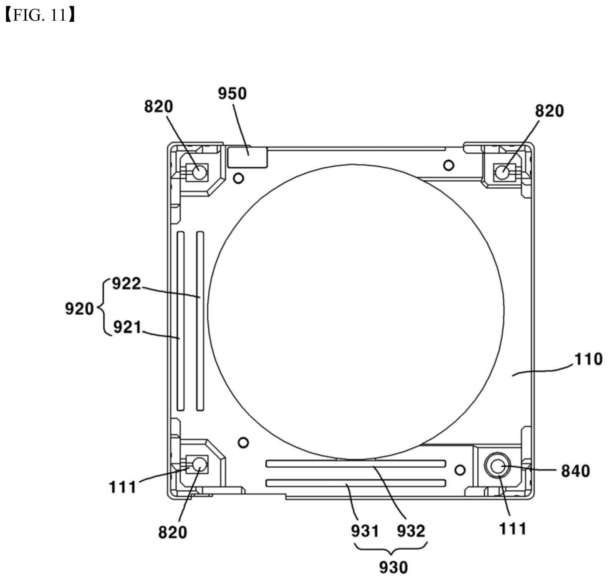

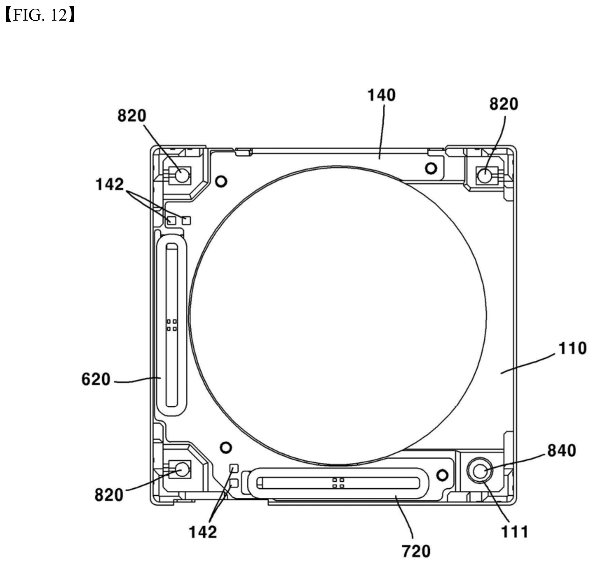

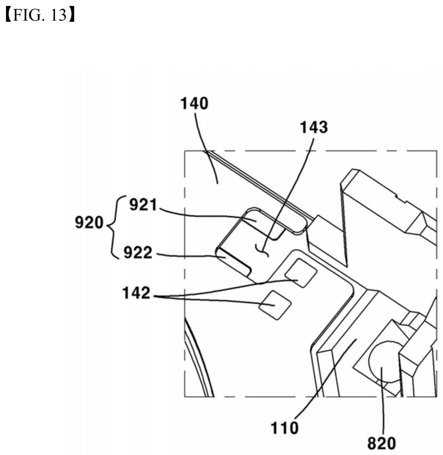

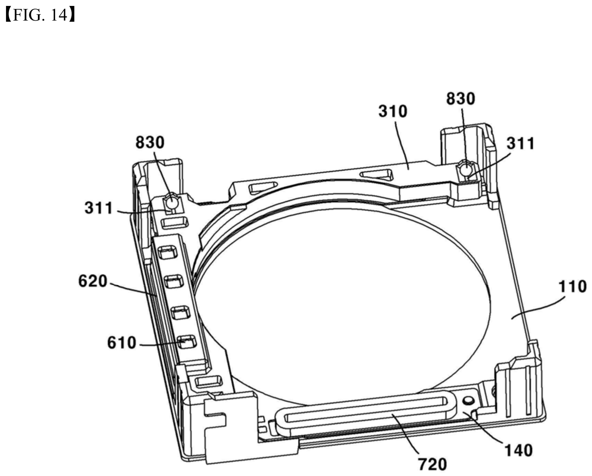

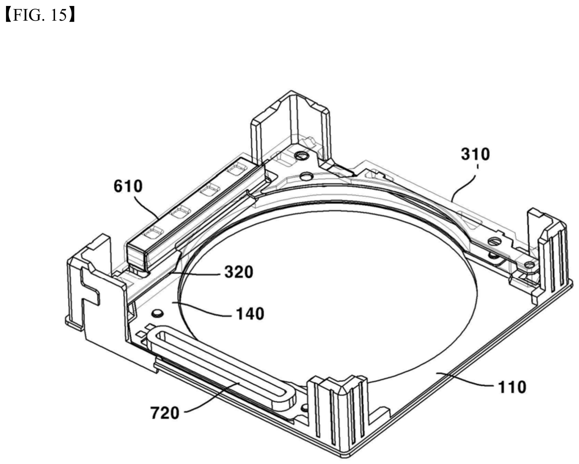

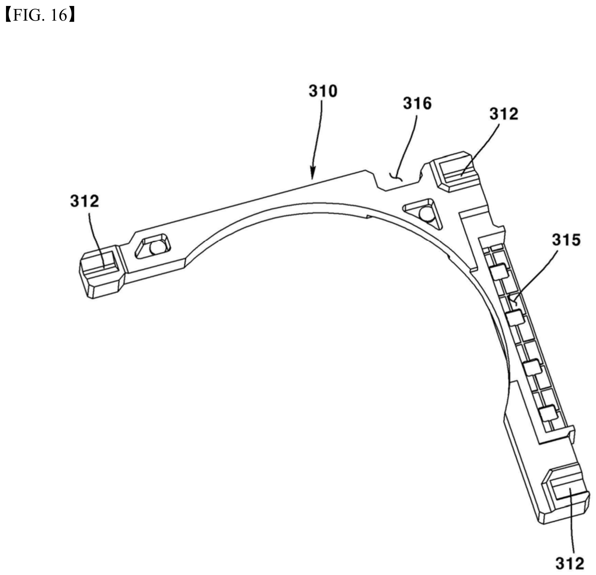

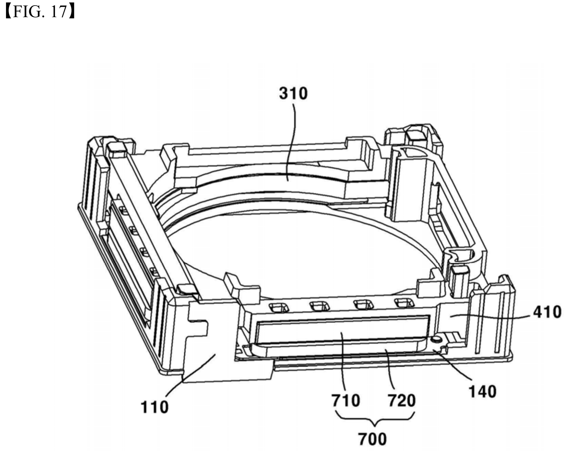

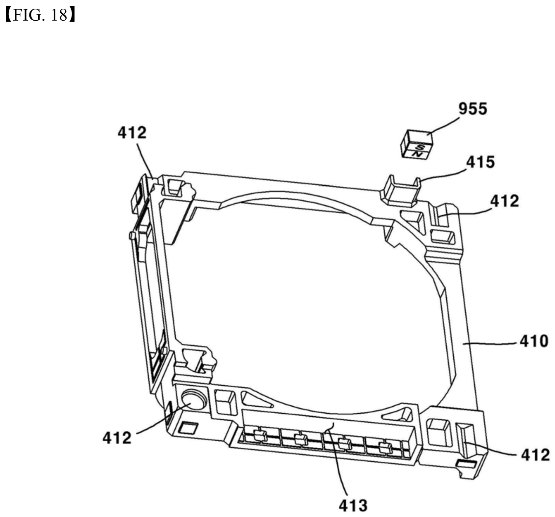

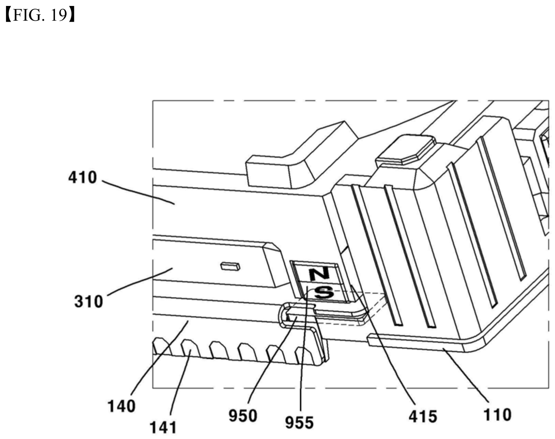

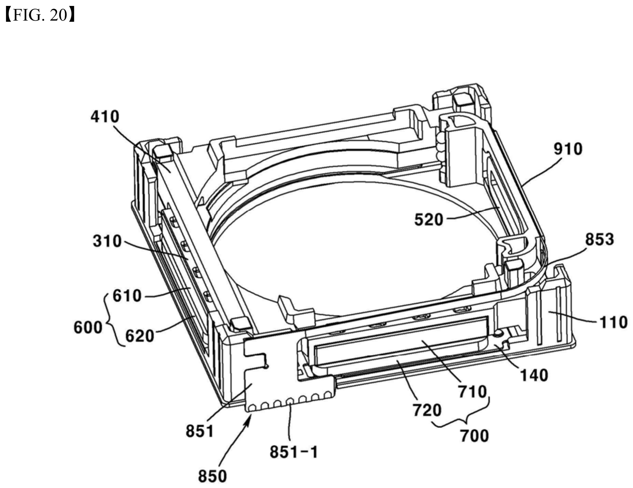

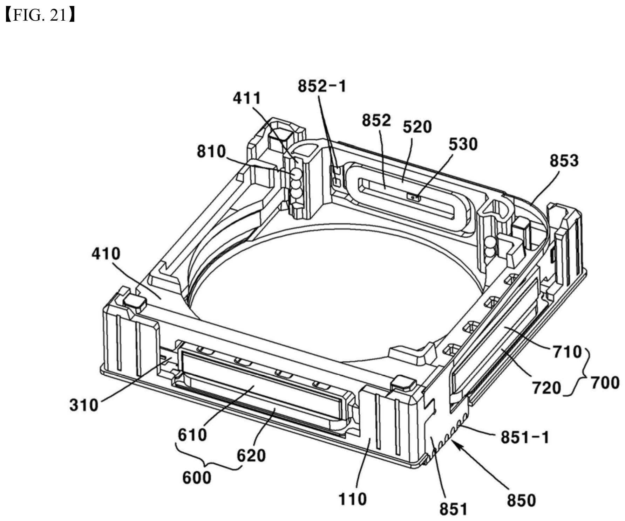

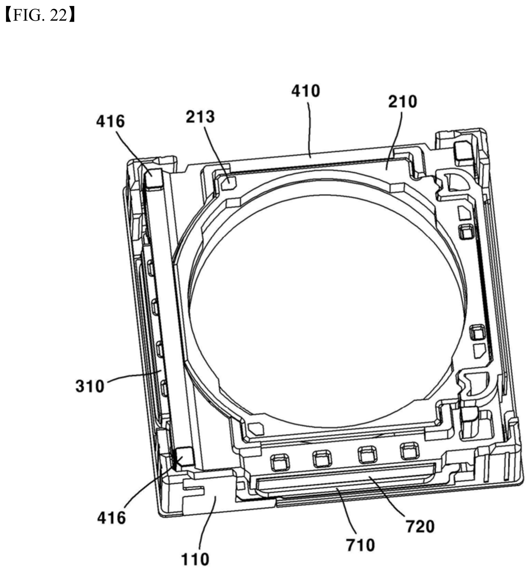

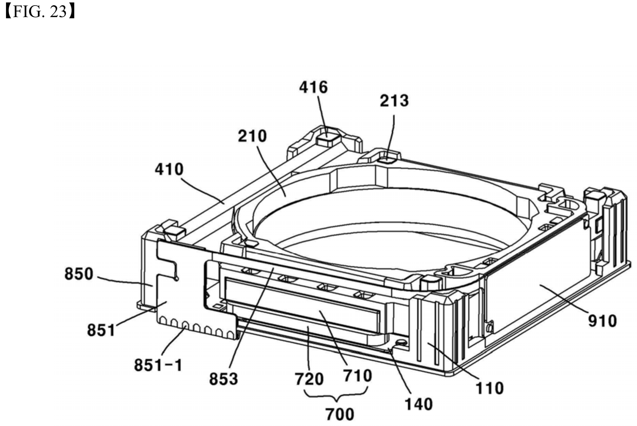

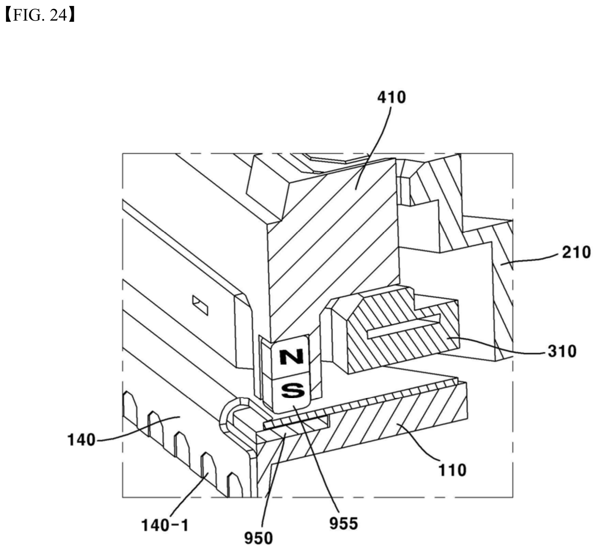

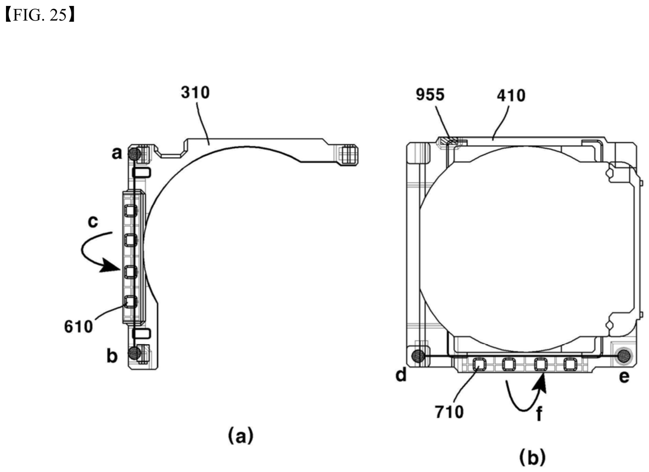

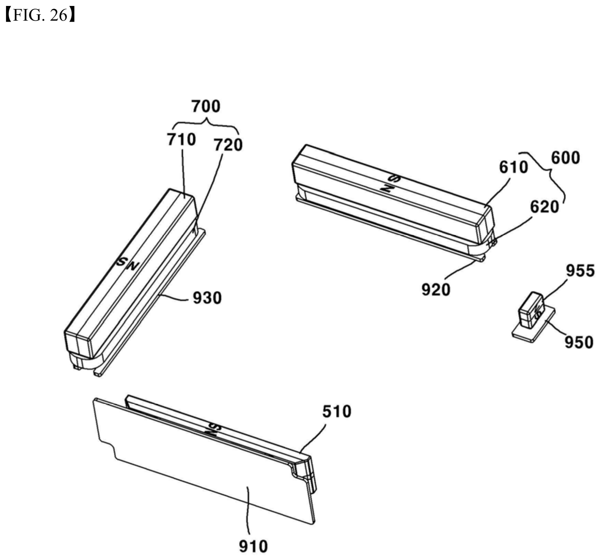

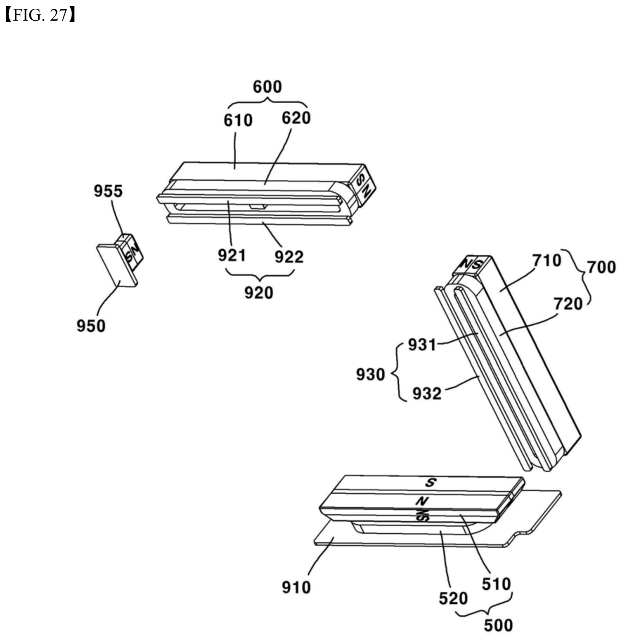

FIG. 1 is a perspective view of a lens driving device according to one embodiment of the present invention, FIG. 2 is a perspective view of a lens driving device viewed from a different direction to FIG. 1 according to one embodiment of the present invention, FIG. 3 is a sectional view taken along line A-A in FIG. 1, FIG. 4 is a sectional view taken along line B-B in FIG. 1, FIG. 5 is a sectional view taken along line C-C in FIG. 1, FIG. 6 is a sectional view taken along line D-D in FIG. 1, FIG. 7 is a sectional view taken along line E-E in FIG. 1, FIG. 8 is a sectional perspective view showing a section of a lens driving device according to one embodiment of the present invention, cut in a direction perpendicular to the optical axis, FIG. 9 is an exploded perspective view of a lens driving device according to one embodiment of the present invention, FIG. 10 is an exploded perspective view of a lens driving device according to one embodiment of the present invention, viewed from a different direction to FIG. 9, FIG. 11 is a plan view illustrating a base and related components of a lens driving device according to one embodiment of the present invention, FIG. 12 is a plan view of a substrate and OIS coil assembly in an assembled state, as shown in FIG. 11, FIG. 13 is an enlarged perspective view of a portion of FIG. 12, FIG. 14 is a perspective view of a state where an OIS-x carrier and related components are assembled in FIG. 12, FIG. 15 is a partially perspective view of FIG. 14 viewed from a different direction, FIG. 16 is a bottom perspective view of an OIS-x carrier of a lens driving device according to one embodiment of the present invention, FIG. 17 is a perspective view showing an OIS-y carrier and related components assembled as shown in FIG. 14, FIG. 18 is a bottom perspective view of an OIS-y carrier of a lens driving device according to one embodiment of the present invention, FIG. 19 is a partially perspective view illustrating the attraction magnet and attraction yoke of a lens driving device according to one embodiment of the present invention, FIG. 20 is a perspective view showing the state of assembly with the substrate in FIG. 17, FIG. 21 is a perspective view of FIG. 20 seen from another direction, FIG. 22 is a perspective view of an AF carrier and related components assembled in FIG. 21, FIG. 23 is a perspective view of FIG. 22 from another angle, FIG. 24 is a sectional perspective view illustrating the attraction magnet and attraction yoke of a lens driving device according to one embodiment of the present invention, FIG. 25 is a diagram illustrating (a) the tilt direction of an OIS-x carrier and (b) the tilt direction of an OIS-y carrier that may occur in the absence of an attraction magnet and attraction yoke, to explain the effect of the attraction magnet and attraction yoke in a lens driving device according to one embodiment of the present invention, FIG. 26 is a perspective view illustrating a magnet, coil, and yoke of a lens driving device according to one embodiment of the present invention, and FIG. 27 is a bottom perspective view of FIG. 26 seen from a different direction.

A lens driving device (10) may be a voice coil motor (VCM). The lens driving device (10) may be a lens driving motor. The lens driving device (10) may be a lens driving actuator. The lens driving device (10) may comprise an AF module. The lens driving device (10) may comprise an OIS module.

The lens driving device (10) may comprise a fixed part (100). The fixed part (100) may be a portion that remains relatively fixed during movement of a moving part. The moving part may move relative to the fixed part (100). The fixed part (100) may be disposed on the outer side of the moving part. The fixed part (100) may accommodate the moving part on its inner side.

The lens driving device (10) may comprise a base (110). The fixed part (100) may comprise the base (110). The base (110) may be disposed beneath an AF carrier (210). The base (110) may be disposed beneath an OIS-x carrier (310). The base (110) may be disposed beneath an OIS-y carrier (410). The base (110) may be coupled to a cover (120). The AF carrier (210), OIS-x carrier (310), and OIS-y carrier (410) may be disposed on the base (110). The AF carrier (210), OIS-x carrier (310), and OIS-y carrier (410) may be disposed on a lower plate (112) of the base (110). The AF carrier (210), OIS-x carrier (310) and OIS-y carrier (410) may be disposed within the base (110). The AF carrier (210), OIS-x carrier (310) and OIS-y carrier (410) may be disposed within a side plate (113) of the base (110).

The base (110) may comprise a groove (111). The groove (111) may be an "OIS-x guide ball receiving groove". The groove (111) may be formed concavely in the base (110). The groove (111) may be formed by a surface of the base (110) being recessed. The groove (111) may be formed on the lower plate (112) of the base (110). The groove (111) may be formed on the upper surface of the lower plate (112) of the base (110). An OIS-x guide ball (820) may be disposed within the groove (111). The groove (111) may be in direct contact with the OIS-x guide ball (820). The groove (111) may be disposed in the x-axis direction perpendicular to the optical axis. The groove (111) may comprise a plurality of grooves. The groove (111) may comprise four grooves. The four grooves may be disposed parallel to each other. The groove (111) may comprise a first groove contacting the OIS-x guide ball (820) at two points and a second groove contacting the OIS-x guide ball (820) at one point. In a modified example, both the first groove and the second groove may contact the OIS-x guide ball (820) at two points.

The base (110) may comprise a lower plate (112). The base (110) may comprise a side plate (113). The side plate (113) of the base (110) may be a "side panel". The side plate (113) of the base (110) may extend from an upper surface of the lower plate (112). The side plate (113) of the base (110) may comprise a plurality of side plates. The side plate (113) of the base (110) may comprise four side plates. The base (110) may comprise a first side portion and a second side portion disposed opposite each other, and a third side portion and a fourth side portion disposed opposite each other. An AF coil (520) may be disposed on the side of the base (110) corresponding to the first side portion. An OIS-x coil (620) may be disposed on the side of the base (110) corresponding to the second side portion. An OIS-y coil (720) may be disposed on the side of the base (110) corresponding to the third side portion.

The base (110) may comprise a groove. The groove may be a "yoke receiving groove". The groove may be formed in the lower plate (112) of the base (110). The groove may be formed on the upper surface of the lower plate (112) of the base (110). An OIS-x attraction yoke (920) and an OIS-y attraction yoke (930) may be disposed in the groove.

The lens driving device (10) may comprise a cover (120). The fixed part (100) may comprise a cover (120). The cover (120) may be disposed on the base (110). The cover (120) may be disposed upon the base (110). The cover (120) may be coupled to the base (110). The cover (120) may be fixed to the base (110). The cover (120) may be adhered to the base (110) with an adhesive. The cover (120) may internally accommodate the AF carrier (210). The cover (120) may internally accommodate the OIS-x carrier (310). The cover (120) may internally accommodate the OIS-y carrier (410). The cover (120) may be a shield member. The cover (120) may be a shield can.

The cover (120) may comprise an upper plate (121). The upper plate (121) may be disposed on the moving part. The upward movement of the moving part may be restricted by the moving part contacting the upper plate (121). The upper plate (121) may comprise a hole through which light passes.

The cover (120) may comprise side plates (122). The side plates (122) may extend from the upper plate (121). The side plates (122) may be disposed on the base (110). The side plates (122) may be disposed on a staircase portion formed protruding at the lower end of the outer surface of the base (110). The side plate (122) may comprise a plurality of side plates. The side plate (122) may comprise four side plates. The side plate (122) may comprise a first side plate and a second side plate disposed opposite each other, and a third side plate and a fourth side plate disposed opposite each other.

An AF magnet (510) may be disposed between the AF carrier (210) and the first side plate of the cover (120). An OIS-x magnet (610) may be disposed between the AF carrier (210) and the second side plate of the cover (120). An OIS-y magnet (710) may be disposed between the AF carrier (210) and the third side plate of the cover (120).

The lens driving device (10) may comprise a substrate (140). The fixed part (100) may comprise a substrate (140). The substrate (140) may be disposed on the base (110). The substrate (140) may be disposed on the lower plate (112) of the base (110). The substrate (140) may be disposed on the upper surface of the lower plate (112) of the base (110). The substrate (140) may be disposed perpendicular to the optical axis. The substrate (140) may be a circuit board. The substrate (140) may be a printed circuit board. The substrate (140) may comprise a flexible printed circuit board (FPCB). The substrate (140) may possess flexibility. The substrate (140) may be bendable. An OIS-x coil (620) may be disposed on the substrate (140). The OIS-x coil (620) may be disposed on the upper surface of the substrate (140). An OIS-x sensor (630) may be disposed on the substrate (140). The OIS-x sensor (630) may be disposed on the upper surface of the substrate (140). An OIS-y coil (720) may be disposed on the substrate (140). The OIS-y coil (720) may be disposed on the upper surface of the substrate (140). An OIS-y sensor (730) may be disposed on the substrate (140). The OIS-y sensor (730) may be disposed on the upper surface of the substrate (140).

The substrate (140) may comprise a body part. The body part may accommodate an OIS-x coil (620) and an OIS-y coil (720). The substrate (140) may comprise a terminal (141). The terminal (141) may be disposed on a terminal part which is bent downward and extended from the body part. The terminal (141) may be formed on the lower end of the substrate (140). The terminal (141) may protrude downward from the base (110).

The terminal (141) may comprise a plurality of terminals. The terminal (141) of the substrate (140) may comprise a first terminal electrically connected to the OIS-x coil (620). The terminal (141) of the substrate (140) may comprise a second terminal electrically connected to the OIS-x sensor (630). The terminal (141) of the substrate (140) may comprise a third terminal electrically connected to the OIS-y coil (720). The terminal (141) of the substrate (140) may comprise a fourth terminal electrically connected to the OIS-y sensor (730). Terminal (141) may be coupled to a printed circuit board (50). Terminal (141) may be coupled to the printed circuit board (50) via solder. Terminal (141) may be coupled to printed circuit board (50) via a conductive member.

The substrate (140) may comprise terminals (142). The terminals (142) may be disposed on the upper surface of the substrate (140). The terminals (142) may comprise two first terminals soldered to the OIS-x coil (620). The two first terminals may be disposed on an outer side of the OIS-x coil (620). The terminals (142) may comprise two second terminals soldered to the OIS-y coil (720). The two second terminals may be disposed on an outer side of the OIS-y coil (720).

The substrate (140) may comprise an avoidance part (143). The avoidance part (143) may be disposed adjacent to the terminal (142) as illustrated in FIG. 13. The avoidance part (143) may be formed to prevent a coil from lifting off the substrate (140) to which it is bonded. The avoidance part (143) may be formed to prevent interference between the coil and the substrate (140). One or more of the OIS-x coil (620)'s line of sight and longitudinal line may be disposed within the avoidance part (143). In the absence of an avoidance part (143), overlapping portions of the OIS-x coil (620) may protrude due to one or more of the OIS-x coil's (620) line of sight and longitudinal lines. One or more of the OIS-y coil's (720) line of sight and longitudinal lines may be disposed within the avoidance part (143). In the absence of an avoidance part (143), the overlapping portion of the OIS-x coil (620) may protrude due to one or more of the OIS-y coil (720)'s ling sight and longitudinal line.

The lens driving device (10) may comprise a moving part. The moving part may be disposed on the fixed part (100). The moving part may be disposed within the fixed part (100). The moving part may be disposed on top of the fixed part (100). The moving part may be movably disposed on the fixed part (100). The moving part may be moved relative to the fixed part (100) by a driving unit. The moving part may move during AF operation. The moving part may move during OIS operation. A lens may be coupled to the moving part.

The lens driving device (10) may comprise an AF moving part (200). The AF moving part (200) may be disposed on the fixed part (100). The AF moving part (200) may be disposed within the fixed part (100). The AF moving part (200) may be dispose on the fixed part (100). The AF moving part (200) may be disposed within the OIS-x moving part (300). The AF moving part (200) may be disposed on the OIS-x moving part (300). The AF moving part (200) may be disposed within the OIS-y moving part (400). The AF moving part (200) may be disposed on the OIS-y moving part (400). The AF moving part (200) may be disposed in a movable manner. The AF moving part (200) may move. The AF moving part (200) may move in the optical axis direction. The AF moving part (200) may be moved in the optical axis direction relative to the fixed part (100), the OIS-x moving unit (300), and the OIS-y moving unit (400) by an AF driving unit (500). The AF moving part (200) can move during AF driving (operation).

When current is applied to an OIS-y coil (720), the AF moving part (200) may move together with the OIS-y moving part (400). When current is applied to an OIS-x coil (620), the AF moving part (200) and the OIS-y moving part (400) may move together with the OIS-x moving part (300).

The lens driving device (10) may comprise an AF carrier (210). The AF moving part (200) may comprise an AF carrier (210). The AF carrier (210) may be a "bobbin". The AF carrier (210) may be an "AF holder". The AF carrier (210) may be disposed within the base (110). The AF carrier (210) may be disposed on the base (110). The AF carrier (210) may be disposed within the OIS-x carrier (310). The AF carrier (210) may be disposed on the OIS-x carrier (310). The AF carrier (210) may be disposed within an OIS-y carrier (410). The AF carrier (210) may be disposed on the OIS-y carrier (410). The AF carrier (210) may be disposed within the cover (120). The AF carrier (210) may be disposed so as to be movable in the optical axis direction. The AF carrier (210) may be movable. The AF carrier (210) may be movable in the optical axis direction.

The AF carrier (210) may comprise grooves. The grooves may be "AF guide ball receiving grooves". An AF guide ball (810) may be disposed within the grooves. The grooves may be in direct contact with the AF guide ball (810). The grooves may comprise multiple grooves. The groove may comprise four grooves. The grooves may be formed in the same number as the AF guide balls (810). A single AF guide ball (810) may be disposed in each of the plural grooves. The groove may comprise a first groove contacting the AF guide ball (810) at two points and a second groove contacting the AF guide ball (810) at one point. As a modified example, both the first groove and the second groove may contact the AF guide ball (810) at two points.

The AF carrier (210) may comprise a groove. The groove may be an "AF magnet receiving groove". The groove may be formed on the outer surface of the AF carrier (210). An AF magnet (510) may be disposed within the groove. The groove may be formed with a shape corresponding to the AF magnet (510).

The AF carrier (210) may comprise an upper stopper (213). The upper stopper (213) may be formed on the upper surface of the AF carrier (210). The upper stopper (213) may protrude from the upper surface of the AF carrier (210). The upper stopper (213) may overlap the upper plate (121) of the cover (120) in the optical axis direction. The upper stopper (213) may contact the upper plate (121) of the cover (120) when the AF carrier (210) moves as far as possible in the upper direction. That is, the upper stopper (213) may limit the upward stroke of the AF carrier (210).

The lens driving device (10) may comprise an OIS-x moving part (300). The OIS-x moving part (300) may be disposed within the fixed part (100). The OIS-x moving part (300) may be disposed within the fixed part (100). The OIS-x moving part (300) may be disposed on top of the fixed part (100). The OIS-x moving part (300) may be disposed below the OIS-y moving part (400). The OIS-x moving part (300) may be disposed between the fixed part (100) and the AF moving part (200). The OIS-x moving part (300) may be disposed between the fixed part (100) and the OIS-y moving part (400). The OIS-x moving part (300) may be disposed in a movable manner. The OIS-x moving part (300) may be moved in the x-axis direction relative to the fixed part (100) by an OIS-x driving unit (600). The OIS-x moving part (300) may move during OIS operation. When the OIS-x moving part (300) moves in the x-axis direction, the OIS-y moving part (400) and the AF moving part (200) may also move together.

The lens driving device (10) may comprise an OIS-x carrier (310). The OIS-x moving part (300) may comprise an OIS-x carrier (310). The OIS-x carrier (310) may be an "OIS-x holder". The OIS-x carrier (310) may be disposed within the base (110). The OIS-x carrier (310) may be disposed on the base (110). The OIS-x carrier (310) may be disposed beneath the OIS-y carrier (410). The OIS-x carrier (310) may be disposed within the cover (120). The OIS-x carrier (310) may be disposed between the base (110) and the AF carrier (210). The OIS-x carrier (310) may be disposed between the base (110) and the OIS-y carrier (410). The OIS-x carrier (310) may be disposed to be movable in the x-axis direction.

The OIS-x carrier (310) may comprise a groove (311). The groove (311) may be an "OIS-y guide ball receiving groove". The groove (311) may be formed on the upper surface of the OIS-x carrier (310). The groove (311) may accommodate an OIS-y guide ball (830). The groove (311) may be in direct contact with the OIS-y guide ball (830). The groove (311) may be disposed in the y-axis direction. The groove (311) may comprise multiple grooves. The groove (311) may comprise four grooves. The groove (311) may comprise a first groove contacting the OIS-y guide ball (830) at two points, and a second groove contacting the OIS-y guide ball (830) at one point. As a modified example, both the first groove and the second groove may contact the AF guide ball (810) at two points.

The OIS-x carrier (310) may comprise a groove (312). The groove (312) may be an "OIS-x guide ball receiving groove". The groove (312) may be formed on the OIS-x carrier (310). The groove (312) may be formed on the lower surface of the OIS-x carrier (310). The groove (312) may accommodate an OIS-x guide ball (820). The groove (312) may be in direct contact with the OIS-x guide ball (820). The groove (312) may be disposed along the x-axis direction. The groove (312) may comprise a plurality of grooves. The groove (312) may comprise four grooves. The groove (312) may comprise a first groove contacting the OIS-x guide ball (820) at two points and a second groove contacting the OIS-x guide ball (820) at one point. As a modified example, both the first groove and the second groove may contact the OIS-x guide ball (820) at two points.

The OIS-x carrier (310) may comprise a groove (315). The groove (315) may be an "OIS-x magnet receiving groove". The groove (315) may be formed on the side of the OIS-x carrier (310). An OIS-x magnet (610) may be disposed within the groove (315). The groove (315) may comprise a shape corresponding to the OIS-x magnet (610).

The OIS-x carrier (310) may comprise a groove (316). The groove (316) may be an "attraction magnet avoidance groove". The groove (316) may be formed concavely on the side of the OIS-x carrier (310). The groove (316) may be formed at a position corresponding to a protrusion (415) of the OIS-y carrier (410).

The lens driving device (10) may comprise a metal member (320). The OIS-x moving part (300) may comprise a metal member (320). The OIS-x carrier (310) may comprise a metal member (320). The metal member (320) may be disposed within the OIS-x carrier (310). The metal member (320) may be insert-molded into the OIS-x carrier (310). The metal member (320) may reinforce the OIS-x moving part (310). The metal member (320) may prevent the OIS-x moving part (310) from breaking.

The lens driving device (10) may comprise an OIS-y moving part (400). The OIS-y moving part (400) may be disposed on the fixed part (100). The OIS-y moving part (400) may be disposed within the fixed part (100). The OIS-y moving part (400) may be disposed on the fixed part (100). The OIS-y moving part (400) may be disposed on the OIS-x moving part (300). The OIS-y moving part (400) may be disposed on the OIS-x moving part (300). The OIS-y moving part (400) may be disposed between the fixed part (100) and the AF moving part (200). The OIS-y moving part (400) may be disposed between the fixed part (100) and the AF moving part (200) in a direction perpendicular to the optical axis. The OIS-y moving part (400) may be disposed between the fixed part (100) and the AF moving part (200) in the x-axis direction. The OIS-y moving part (400) may be movably disposed on the fixed part (100). The OIS-y moving part (400) may move in the y-axis direction relative to the fixed part (100) by the OIS-y driving unit (700). The OIS-y moving part (400) may move in the y-axis direction relative to the OIS-x moving part (300) by the OIS-y driving unit (700). The OIS-y moving part (400) may move during OIS operation. When the OIS-y moving part (400) moves, the AF moving part (200) may also move therewith.

The lens driving device (10) may comprise an OIS-y carrier (410). The OIS-y moving part (400) may comprise an OIS-y carrier (410). The OIS-y carrier (410) may be an "OIS-y holder". The OIS-y carrier (410) may be disposed on the base (110). The OIS-y carrier (410) may be disposed within the base (110). The OIS-y carrier (410) may be disposed on top of the base (110). The OIS-y carrier (410) may be disposed within the cover (120). The OIS-y carrier (410) may be disposed on the OIS-x carrier (310). The OIS-y carrier (410) may be disposed on top of the OIS-x carrier (310). The OIS-y carrier (410) may be disposed between the base (110) and the AF carrier (210). The OIS-y carrier (410) may be disposed between the base (110) and the AF carrier (210) in a direction perpendicular to the optical axis. The OIS-y carrier (410) may be disposed between the side plate (113) of the base (110) and the AF carrier (210) in the x-axis direction. The OIS-y carrier (410) may be disposed to be movable in the y-axis direction. The OIS-y carrier (410) may be disposed between the base (110) and the OIS-x carrier (310).

The OIS-y carrier (410) may comprise a groove (411). The groove (411) may be an "AF guide ball receiving groove". The groove (411) may be formed concavely on the OIS-y carrier (410). The groove (411) may be formed on the inner surface of the OIS-y carrier (410). The groove (411) may accommodate an AF guide ball (810). The groove (411) may be in direct contact with the AF guide ball (810). The groove (411) may be disposed along the optical axis direction. The groove (411) may comprise multiple grooves. The groove (411) may comprise two grooves. The groove (411) may comprise a first groove contacting the AF guide ball (810) at two points and a second groove contacting the AF guide ball (810) at one point. As a modified example, both the first groove and the second groove may contact the AF guide ball (810) at two points.

The OIS-y carrier (410) may comprise a groove (412). The groove may be an "OIS-y guide ball receiving groove". The groove (412) may be formed concavely in the OIS-y carrier (410). The groove (412) may be formed on the lower surface of the OIS-y carrier (410). The groove (412) may accommodate an OIS-y guide ball (830). The groove (412) may be in direct contact with the OIS-y guide ball (830). The groove (412) may be disposed in the y-axis direction. The groove (412) may comprise multiple grooves. The groove (412) may comprise four grooves. The four grooves may be disposed parallel to each other. The groove (412) may comprise a first groove contacting the OIS-y guide ball (830) at two points and a second groove contacting the OIS-y guide ball (830) at one point. As a modified example, both the first groove and the second groove may contact the OIS-y guide ball (830) at two points.

The OIS-y carrier (410) may comprise a groove (413). The groove (413) may be an "OIS-y magnet receiving groove". The groove (413) may be formed on the outer surface of the OIS-y carrier (410). The OIS-y magnet (710) may be disposed within the groove (413). The groove (413) may comprise a shape corresponding to the OIS-y magnet (710).

The OIS-y carrier (410) may comprise a groove. The groove may be an "AF magnetic yoke receiving groove". The groove may be formed on the outer surface of the OIS-y carrier (410). An AF magnetic yoke (910) may be disposed within the groove. The groove may comprise a shape corresponding to the AF magnetic yoke (910). The groove may comprise a plurality of grooves. The groove may comprise two grooves. The groove may be formed in a number corresponding to the AF yoke (910).

The OIS-y carrier (410) may comprise a protrusion (415). The protrusion (415) may project downward. The protrusion (415) of the OIS-y carrier (410) may overlap with the OIS-x carrier (310) in a direction perpendicular to the optical axis. An attraction magnet (955) may be disposed on the protrusion (415) of the OIS-y carrier (410).

The OIS-y carrier (410) may comprise a stopper (416). The stopper (416) may protrude from the upper surface of the OIS-y carrier (410). The stopper (416) may be formed on the upper surface of the OIS-y carrier (410). The stopper (416) may be an upper stopper. The stopper (416) may overlap the upper plate (121) of the cover (120) in the optical axis direction. The stopper (416) may contact the upper plate (121) of the cover (120) when the OIS-y carrier (410) moves in the upward direction. The stopper (416) may be formed on the corner edge of the OIS-y carrier (410). In this case, the stopper (416) may prevent rotation of the OIS-y carrier (410) by contact with the base (110).

The lens driving device (10) may comprise a driving unit. The driving unit may move the moving part relative to the fixed part. The driving unit may comprise an AF driving unit (500). The driving unit may comprise an OIS driving unit (600, 700). The driving unit may comprise a coil and a magnet.

The lens driving device (10) may comprise an AF driving unit (500). The AF driving unit (500) can move the AF moving part (200) in the optical axis direction. The AF driving unit (500) can move the AF carrier (210) in the optical axis direction. The AF driving unit (500) can move the AF carrier (210) in the optical axis direction via electromagnetic force. The AF driving unit (500) may comprise a coil and a magnet. The AF driving unit (500) may comprise a coil and a magnet that interact with each other. The AF coil (520) and the AF magnet (510) may move the AF moving part (200) in the optical axis direction.

When the OIS-y carrier (410) moves in the x-axis direction, the distance between the AF magnet (510) and the AF coil (520) can be maintained. When the OIS-y carrier (410) moves in the y-axis direction, the distance between the AF magnet (510) and the AF coil (520) can be maintained.

When the OIS-y moving part (400) and the AF moving part (200) are moved by the OIS-y driving unit (700), the distance between the facing surfaces of the AF coil (520) and the AF magnet (510) remains unchanged, and the AF magnet (510) may be eccentric relative to the AF coil (520).

The lens driving device (10) may comprise an AF magnet (510). The AF driving unit (500) may comprise an AF magnet (510). The AF magnet (510) may be disposed on the AF moving part (200). The AF magnet (510) may be disposed on the AF carrier (210). The AF magnet (510) may be disposed within a groove of the AF carrier (210). The AF magnet (510) may be disposed on the outer side of the AF carrier (210). The AF magnet (510) may be fixed to the AF carrier (210). The AF magnet (510) may be coupled to the AF carrier (210). The AF magnet (510) may be adhered to the AF carrier (210) using an adhesive. The AF magnet (510) may be disposed within the cover (120). The AF magnet (510) may interact with the AF coil (520). The AF magnet (510) may interact electromagnetically with the AF coil (520). The AF magnet (510) may be disposed in a location corresponding to the AF coil (520). The AF magnet (510) may face the AF coil (520). The AF magnet (510) may be opposed to the AF coil (520). The AF magnet (510) may overlap the AF coil (520) in a direction perpendicular to the optical axis. The AF magnet (510) may overlap the AF coil (520) in the x-axis direction. In the x-axis direction, the AF magnet (510) may overlap the OIS-x magnet (610).

The AF magnet (510) may incorporate a C-cut for greater attraction (magnetic force) with the AF yoke (910). The AF magnet (510) may incorporate a structure for directing magnetic force towards the AF yoke (910). The AF magnet (510) may comprise a first surface facing the AF coil (520) and a second surface opposite the first surface. In the y-axis direction, the width of the first surface of the AF magnet (510) (referenced as W1 in FIG. 20) may be smaller than the width of the second surface of the AF magnet (510) (referenced as W2 in FIG. 20). The AF magnet (510) may comprise a chamfered edge configuration.

The AF magnet (510) may be a two-pole magnet. The AF magnet (510) may comprise an N-pole and an S-pole. The upper surface of the AF magnet (510) may have the N-pole and the lower surface of the AF magnet (510) may have the S-pole.

As a modified example, the AF magnet (510) may be a quadrupole (four-pole) magnet. The AF magnet (510) may comprise a quadrupole contact magnet. The AF magnet (510) may comprise a first magnet portion containing an N-pole and an S-pole, and a second magnet portion containing an N-pole and an S-pole. The first magnet portion and the second magnet portion may be disposed in a vertical direction. The first magnet portion and the second magnet portion may be spaced apart in a vertical direction, with a neutral portion disposed between the first magnet portion and the second magnet portion.

The lens driving device (10) may comprise an AF coil (520). The AF driving unit (500) may comprise an AF coil (520). The AF coil (520) may interact with the AF magnet (510). The AF coil (520) may move the AF magnet (510) in the optical axis direction. The AF coil (520) may move the AF magnet (510) in the optical axis direction through interaction with the AF magnet (510). The AF coil (520) may face the AF magnet (510). The AF coil (520) may face the AF magnet (510). The AF coil (520) may be disposed at a location corresponding to the AF magnet (510). The AF coil (520) may overlap with the AF magnet (510) in the x-axis direction. The AF coil (520) may be disposed on the OIS-y moving part (400). The AF coil (520) may be disposed on the OIS-y carrier (410). The AF coil (520) may move together with the OIS-y carrier (410). The AF coil (520) may move together with the OIS-y carrier (410) during movement of the OIS-y carrier (410). The AF coil (520) may be disposed between the AF magnet (510) and the cover (120). The AF coil (520) may be disposed on the substrate (850). The AF coil (520) may be disposed on the inner side portion (852) of the substrate (850).

The lens driving device (10) may comprise an AF sensor (530). The AF driving unit (500) may comprise an AF sensor (530). The AF sensor (530) may be disposed on the substrate (850). The AF sensor (530) may be disposed on the inner side portion (852) of the substrate (850). The AF sensor (530) may comprise a Hall IC. The AF sensor (530) may comprise a Hall sensor. The AF sensor (530) may detect the AF magnet (510). The AF sensor (530) may detect the magnetic force of the AF magnet (510). The AF sensor (530) may detect the movement of the AF magnet (510). The amount of movement or position of the AF magnet (510) detected by the AF sensor (530) may be used for feedback in the auto-focus (AF) system.

The AF sensor (530) may be disposed within the AF coil (520). The AF sensor (530) may overlap with the AF coil (520) in the optical axis direction. The AF sensor (530) may overlap with the AF magnet (510) in the x-axis direction. In a modified example, the AF sensor (530) may be disposed externally to the AF coil (520). The AF sensor (530) may be disposed opposite the AF magnet (510). The AF sensor (530) may be disposed at a location corresponding to the AF magnet (510).

The AF sensor (530) may comprise a drive IC. In this case, the drive IC may be electrically connected to the AF coil (520). The drive IC may apply a current to the AF coil (520).

The lens driving device (10) may comprise a capacitor. The capacitor may be disposed on the substrate (850). The capacitor may be disposed adjacent to the AF sensor (530). The capacitor may be disposed within the AF coil (520). The capacitor may eliminate noise associated with data and current transmitted and received by the AF sensor (530).

The lens driving device (10) may comprise an OIS-x driving unit (600). The OIS-x driving unit (600) can move the OIS-x moving part (300) in the x-axis direction perpendicular to both the optical axis direction and the y-axis direction. The OIS-x driving unit (600) can move the OIS-x carrier (310) in the x-axis direction perpendicular to the optical axis direction. The OIS-x driving unit (600) can move the OIS-x carrier (310) in the x-axis direction. The OIS-x driving unit (600) can move the OIS-x carrier (310) in the x-axis direction via electromagnetic force. The OIS-x driving unit (600) may comprise a coil and a magnet. The OIS-x coil (620) and OIS-x magnet (610) can move the OIS-x moving part (300) in the x-axis direction, which is perpendicular to both the optical axis direction and the y-axis direction.

When the OIS-x moving part (300) moves by the OIS-x driving unit (600), the AF moving part (200) and the OIS-y moving part (400) can move together with the OIS-x moving part (300). The AF moving part (200) and the OIS-y moving part (400) can move in the x-axis direction together with the OIS-x moving part (300). When the OIS-x carrier (310) moves in the x-axis direction, the OIS-x carrier (310), OIS-y carrier (410), and AF carrier (210) may move together.

The lens driving device (10) may comprise an OIS-x magnet (610). The OIS-x driving unit (600) may comprise an OIS-x magnet (610). The OIS-x magnet (610) may be disposed on the OIS-x moving part (300). The OIS-x magnet (610) may be disposed on the OIS-x carrier (310). The OIS-x magnet (610) may be disposed within a groove (315) of the OIS-x carrier (310). The OIS-x magnet (610) may be secured to the OIS-x carrier (310). The OIS-x magnet (610) may be coupled to the OIS-x carrier (310). The OIS-x magnet (610) may be adhered to the OIS-x carrier (310) using an adhesive. The OIS-x magnet (610) may be disposed within the cover (120). The OIS-x magnet (610) may interact with the OIS-x coil (620). The OIS-x magnet (610) may interact electromagnetically with the OIS-x coil (620). The OIS-x magnet (610) may be disposed in a corresponding location relative to the OIS-x coil (620). The OIS-x magnet (610) may face the OIS-x coil (620). The OIS-x magnet (610) may be opposed to the OIS-x coil (620). The OIS-x magnet (610) may overlap the OIS-x coil (620) in the optical axis direction.

The OIS-x magnet (610) may be a two-pole magnet. The OIS-x magnet (610) may comprise an N pole and an S pole. The inner surface of the OIS-x magnet (610) may have an N pole and the outer surface of the OIS-x magnet (610) may have an S pole.

As a modified example, the OIS-x magnet (610) may be a quadrupole magnet. The OIS-x magnet (610) may comprise a quadrupole magnet. The OIS-x magnet (610) may comprise a first magnet portion comprising an N pole and an S pole, and a second magnet portion comprising an N pole and an S pole. The first magnet portion and second magnet portion may be disposed horizontally. The first magnet portion and the second magnet portion may be spaced apart horizontally, with a neutral portion disposed between the first magnet portion and the second magnet portion.

In this embodiment, even when the OIS-x magnet (610) moves due to interaction with the OIS-x coil (620), the distance between the OIS-x coil (620) and the OIS-x magnet (610) can be maintained constant.

The lens driving device (10) may comprise an OIS-x coil (620). The OIS-x driving unit (600) may comprise an OIS-x coil (620). The OIS-x coil (620) may interact with the OIS-x magnet (610). The OIS-x coil (620) can move the OIS-x magnet (610) in the x-axis direction. The OIS-x coil (620) can move the OIS-x magnet (610) in the x-axis direction through interaction with the OIS-x magnet (610). The OIS-x coil (620) may be disposed opposite the OIS-x magnet (610). The OIS-x coil (620) may face the OIS-x magnet (610). The OIS-x coil (620) may be disposed at a location corresponding to the OIS-x magnet (610). The OIS-x coil (620) may be disposed on the substrate (140). The OIS-x coil (620) may be disposed on the substrate (140) at a location corresponding to the OIS-x magnet (610). The OIS-x coil (620) may be disposed on the base (110). The OIS-x coil (620) may be disposed on the fixed part (100).

The lens driving device (10) may comprise an OIS-x sensor (630). The OIS-x driving unit (600) may comprise an OIS-x sensor (630). The OIS-x sensor (630) may be disposed on the substrate (140). The OIS-x sensor (630) may comprise a Hall IC. The OIS-x sensor (630) may comprise a Hall sensor. The OIS-x sensor (630) may detect the OIS-x magnet (610). The OIS-x sensor (630) may detect the magnetic force of the OIS-x magnet (610). The OIS-x sensor (630) may detect the movement of the OIS-x magnet (610). The amount of movement or position of the OIS-x magnet (610) detected by the OIS-x sensor (630) may be used for feedback in the optical image stabilization (OIS) drive in the x-axis direction.

The OIS-x sensor (630) may be disposed within the OIS-x coil (620). The OIS-x sensor (630) may overlap with the OIS-x coil (620) in a direction perpendicular to the optical axis. The OIS-x sensor (630) may overlap with the OIS-x magnet (610) in the optical axis direction. In a modified example, the OIS-x sensor (630) may be disposed on the outer side of the OIS-x coil (620). The OIS-x sensor (630) may be disposed opposite the OIS-x magnet (610). The OIS-x sensor (630) may be disposed at a location corresponding to the OIS-x magnet (610).

The lens driving device (10) may comprise an OIS-y driving unit (700). The OIS-y driving unit (700) can move the OIS-y moving part (400) in the y-axis direction, which is perpendicular to both the optical axis direction and the x-axis direction. The OIS-y driving unit (700) can move the OIS-y carrier (410) in the y-axis direction, which is perpendicular to both the optical axis direction and the x-axis direction. The OIS-y driving unit (700) can move the OIS-y carrier (410) in the y-axis direction. The OIS-y driving unit (700) can move the OIS-y carrier (410) in the y-axis direction via electromagnetic force. The OIS-y driving unit (700) may comprise a coil and a magnet. The OIS-y coil (720) and OIS-y magnet (710) can move the OIS-y moving part (400) in the y-axis direction perpendicular to the optical axis.

When the OIS-y moving part (400) is moved by the OIS-y driving unit (700), the AF moving part (200) may move together with the OIS-y moving part (400). The AF moving part (200) may move together with the OIS-y moving part (400) in the y-axis direction. When the OIS-y carrier (410) moves in the y-axis direction, the OIS-y carrier (410) and the AF carrier (210) may move together.

The lens driving device (10) may comprise an OIS-y magnet (710). The OIS-y driving unit (700) may comprise an OIS-y magnet (710). The OIS-y magnet (710) may be disposed on the OIS-y moving part (400). The OIS-y magnet (710) may be disposed on the OIS-y carrier (410). The OIS-y magnet (710) may be disposed within a groove (413) of the OIS-y carrier (410). The OIS-y magnet (710) may be disposed on an outer surface of the OIS-y carrier (410). The OIS-y magnet (710) may be secured to the OIS-y carrier (410). The OIS-y magnet (710) may be coupled to the OIS-y carrier (410). The OIS-y magnet (710) may be adhered to the OIS-y carrier (410) using an adhesive. The OIS-y magnet (710) may be disposed within the cover (120). The OIS-y magnet (710) may interact with the OIS-y coil (720). The OIS-y magnet (710) may interact electromagnetically with the OIS-y coil (720). The OIS-y magnet (710) may be disposed in a corresponding location relative to the OIS-y coil (720). The OIS-y magnet (710) may face the OIS-y coil (720). The OIS-y magnet (710) may be opposed to the OIS-y coil (720). The OIS-y magnet (710) may overlap the OIS-y coil (720) along the optical axis direction.

The OIS-y magnet (710) may be a two-pole magnet. The OIS-y magnet (710) may comprise an N pole and an S pole. The inner surface of the OIS-y magnet (710) may have an N pole, and the outer surface of the OIS-y magnet (710) may have an S pole.

As a modified example, the OIS-y magnet (710) may be a quadrupole magnet. The OIS-y magnet (710) may comprise a quadrupole contact magnet. The OIS-y magnet (710) may comprise a first magnet portion comprising an N pole and an S pole, and a second magnet portion comprising an N pole and an S pole. The first magnet portion and the second magnet portion may be disposed horizontally. The first magnet portion and the second magnet portion may be spaced apart horizontally, with a neutral portion disposed between the first magnet portion and the second magnet portion.

The lens driving device (10) may comprise an OIS-y coil (720). The OIS-y driving unit (700) may comprise an OIS-y coil (720). The OIS-y coil (720) may interact with an OIS-y magnet (710). The OIS-y coil (720) may move the OIS-y magnet (710) in the y-axis direction. The OIS-y coil (720) may move the OIS-y magnet (710) in the y-axis direction through interaction with the OIS-y magnet (710). The OIS-y coil (720) may face the OIS-y magnet (710). The OIS-y coil (720) may face the OIS-y magnet (710). The OIS-y coil (720) may be disposed at a location corresponding to the OIS-y magnet (710). The OIS-y coil (720) may be disposed on the substrate (140). The OIS-y coil (720) may be disposed on the substrate (140) in a location corresponding to the OIS-y magnet (710). The OIS-y coil (720) may be disposed on the base (110). The OIS-y coil (720) may be disposed on the fixed part (100).

The lens driving device (10) may comprise an OIS-y sensor (730). The OIS-y driving unit (700) may comprise an OIS-y sensor (730). The OIS-y sensor (730) may be disposed on the substrate (140). The OIS-y sensor (730) may comprise a Hall IC. The OIS-y sensor (730) may comprise a Hall sensor. The OIS-y sensor (730) may detect the OIS-y magnet (710). The OIS-y sensor (730) may detect the magnetic force of the OIS-y magnet (710). The OIS-y sensor (730) may detect the movement of the OIS-y magnet (710). The amount of movement or position of the OIS-y magnet (710) detected by the OIS-y sensor (730) may be used for feedback in the optical image stabilization (OIS) drive in the y-axis direction.

The OIS-y sensor (730) may be disposed within the OIS-y coil (720). The OIS-y sensor (730) may overlap with the OIS-y coil (720) in a direction perpendicular to the optical axis. The OIS-y sensor (730) may overlap with the OIS-y magnet (710) in the optical axis direction. As a modified example, the OIS-y sensor (730) may be disposed on the outer side of the OIS-y coil (720). The OIS-y sensor (730) may be disposed opposite the OIS-y magnet (710). The OIS-y sensor (730) may be disposed at a location corresponding to the OIS-y magnet (710).

The lens driving device (10) may comprise a guide member. The guide member may comprise a ball. The guide member may comprise a pin. The guide member may comprise a cylindrical member. The guide member may guide the movement of the moving part relative to the fixed part (100) in a specific direction.

The lens driving device (10) may comprise a support member. The support member may comprise a ball.

The lens driving device (10) may comprise an AF guide ball (810). The AF guide ball (810) may guide the movement of the AF moving part (200) in the optical axis direction. The AF guide ball (810) may guide the movement of the AF carrier (210) in the optical axis direction. The AF guide ball (810) may guide the movement of the AF carrier (210) relative to the OIS-y carrier (410) in the optical axis direction. The AF guide ball (810) may be disposed between the AF moving part (200) and the OIS-y moving part (400). The AF moving part (200) and the OIS-y moving part (400) may comprise grooves (211, 411) extending in the optical axis direction. The AF guide ball (810) may be disposed between the groove of the AF moving part (200) and the groove (411) of the OIS-y moving part (400). The AF guide ball (810) may be disposed between the OIS-y carrier (410) and the AF carrier (210). The AF guide ball (810) may be disposed between the OIS-y carrier (410) and the AF carrier (210) in the x-axis direction. The AF guide ball (810) may be disposed between the inner side surface of the OIS-y carrier (410) and the outer side surface of the AF carrier (210). When viewed from the outer side of the AF carrier (210), the AF guide ball (810) may be horizontally overlapped with the AF magnet (510).

The AF guide ball (810) may be disposed between the groove (411) of the OIS-y moving part (400) and the groove of the AF moving part (200). The groove (411) of the OIS-y moving part (400) and at least one of the grooves of the AF moving part (200) may extend in the optical axis direction to a length longer than the diameter of the AF guide ball (810).

The AF guide ball (810) may be disposed within the groove (411) of the OIS-y carrier (410). The AF guide ball (810) may be disposed within the groove of the AF carrier (210). The AF guide ball (810) may comprise a first-first ball contacting the OIS-y carrier (410) and the AF carrier (210) at four points, and a first-second ball contacting the OIS-y carrier (410) and the AF carrier (210) at three points. The AF guide ball (810) may be spherical in shape. The AF guide ball (810) may be formed from metal. Grease may be applied to the surface of the AF guide ball (810).

The AF guide ball (810) may comprise a plurality of balls. The AF guide ball (810) may comprise four balls. Two AF guide balls (810) may be disposed on one side of the AF magnet (510), and the remaining two AF guide balls (810) may be disposed on the other side of the AF magnet (510). The AF guide ball (810) may comprise multiple unit balls. The AF guide ball (810) may comprise a ball part containing multiple unit balls.

The lens driving device (10) may comprise an OIS-x guide ball (820). The OIS-x guide ball (820) may guide the movement of the OIS-x moving part (300) in the x-axis direction. The OIS-x guide ball (820) may guide the movement of the OIS-x carrier (310) in the x-axis direction. The OIS-x guide ball (820) may guide the movement of the OIS-x carrier (310) relative to the base (110) in the x-axis direction. The OIS-x guide ball (820) may be disposed between the OIS-x moving part (300) and the fixed part (100). The OIS-x guide ball (820) may contact both the OIS-x moving part (300) and the fixed part (100). The OIS-x moving part (300) and the fixed part (100) may comprise grooves (111, 312) extending in the x-axis direction. The OIS-x guide ball (820) may be disposed between the groove (312) of the OIS-x moving part (300) and the groove (111) of the fixed part (100). The OIS-x guide ball (820) may be disposed between the base (110) and the OIS-x carrier (310). The OIS-x guide ball (820) may contact the base (110) and the OIS-x carrier (310). The OIS-x guide ball (820) may be disposed between the base (110) and the OIS-x carrier (310) in the optical axis direction.

The OIS-x guide ball (820) may be disposed between the groove (111) of the base (110) and the groove (312) of the OIS-x moving part (300). At least one of the groove (111) of the base (110) and the groove (312) of the OIS-x moving part (300) may extend in the x-axis direction to a length greater than the diameter of the OIS-x guide ball (820).

The OIS-x guide ball (820) may be disposed within the groove (111) of the base (110). The OIS-x guide ball (820) may be disposed within the groove (312) of the OIS-x carrier (310). The OIS-x guide ball (820) may comprise a first-first ball contacting the base (110) and the OIS-x carrier (310) at four points, and a first-second ball contacting the base (110) and the OIS-x carrier (310) at three points. The OIS-x guide ball (820) may be spherical in shape. The OIS-x guide ball (820) may be formed from metal. Grease may be applied to the surface of the OIS-x guide ball (820).

The OIS-x guide ball (820) may comprise a plurality of balls. The OIS-x guide ball (820) may comprise four balls. The four balls may be disposed at the four corner regions of the upper surface of the base (110). The OIS-x guide ball (820) may comprise a plurality of unit balls. The OIS-x guide ball (820) may comprise a ball part comprising multiple unit balls.

The lens driving device (10) may comprise an OIS-y guide ball (830). The OIS-y guide ball (830) may guide the movement of the OIS-y moving part (400) in the y-axis direction. The OIS-y guide ball (830) may guide the movement of the OIS-y carrier (410) in the y-axis direction. The OIS-y guide ball (830) may guide the movement of the OIS-y carrier (410) relative to the OIS-x carrier (310) in the y-axis direction. The OIS-y guide ball (830) may be disposed between the OIS-y moving part (400) and the OIS-x carrier (310). The OIS-y guide ball (830) may be in contact with the OIS-y moving part (400) and the OIS-x carrier (310). The OIS-y guide ball (830) may be disposed between the OIS-y moving part (400) and the OIS-x carrier (310) in the optical axis direction. The OIS-y moving part (400) and the OIS-x moving part (300) may comprise grooves (311, 412) extending in the y-axis direction. The OIS-y guide ball (830) may be disposed between the groove (412) of the OIS-y moving part (400) and the groove (311) of the OIS-x moving part (300). The OIS-y guide ball (830) may be disposed between the OIS-x carrier (310) and the OIS-y carrier (410). The OIS-y guide ball (830) may contact both the OIS-x carrier (310) and the OIS-y carrier (410). The OIS-y guide ball (830) may be disposed between the OIS-x carrier (310) and the OIS-y carrier (410) in the optical axis direction. The OIS-y guide ball (830) may be disposed within a groove (311) of the OIS-x carrier (310). The OIS-y guide ball (830) may be disposed between the upper surface of the OIS-x carrier (310) and the lower surface of the OIS-y carrier (410).

The OIS-y guide ball (830) may be disposed between the groove (311) of the OIS-x moving part (300) and the groove (412) of the OIS-y moving part (400). At least one of the groove (311) of the OIS-x moving part (300) and the groove (412) of the OIS-y moving part (400) may extend in the y-axis direction to a length longer than the diameter of the OIS-y guide ball (830).

The OIS-y guide ball (830) may be disposed within the groove (311) of the OIS-x carrier (310). The OIS-y guide ball (830) may be disposed within the groove (412) of the OIS-y carrier (410). The OIS-y guide ball (830) may comprise a first-first ball contacting the OIS-x carrier (310) and the OIS-y carrier (410) at four points, and a first-second ball contacting the OIS-x carrier (310) and the OIS-y carrier (410) at three points. The OIS-y guide ball (830) may be spherical in shape. The OIS-y guide ball (830) may be formed from metal. Grease may be applied to the surface of the OIS-y guide ball (830).

The OIS-y guide ball (830) may comprise a plurality of balls. The OIS-y guide ball (830) may comprise four balls. The four balls may be disposed at the four corner regions of the upper surface of the OIS-x carrier (310). The OIS-y guide ball (830) may comprise a plurality of unit balls. The OIS-y guide ball (830) may comprise a ball part comprising multiple unit balls.

The lens driving device (10) may comprise an OIS guide ball (840). The OIS guide ball (840) may be disposed between the OIS-y carrier (410) and the base (110). The OIS guide ball (840) may be in contact with the OIS-y carrier (410) and the base (110). The OIS guide ball (840) may support the OIS-y carrier (410) so that it is movable relative to the base (110). The OIS guide ball (840) may support the OIS-y carrier (410) so that it is movable relative to the base (110) in both the x-axis direction and the y-axis direction.

The lens driving device (10) may comprise a substrate (850). The substrate (850) may connect the OIS-y carrier (410) and the base (110). The substrate (850) may connect the OIS-y carrier (410) and the base (110) elastically. The substrate (850) may connect the OIS-y carrier (410) to the base (110) in a manner permitting movement relative to the base (110). The substrate (850) may possess flexibility. The substrate (850) may comprise a curved configuration. The substrate (850) may comprise a folded configuration. The substrate (850) may be foldable. The substrate (850) may possess elasticity. The substrate (850) may be a flexible printed circuit board. The substrate (850) may be an FPCB (flexible printed circuit board).

The substrate (850) may comprise an outer (side) portion (851). The outer portion (851) may be dispose on the base (110). The outer portion (851) may be secured to the base (110). The outer portion (851) may be coupled to the base (110). The outer portion (851) may be adhered to the base (110) by an adhesive. The outer portion (851) may be disposed on the side plate (122) of the cover (120).

The outer portion (851) may comprise a terminal (851-1). The terminal (851-1) may be formed at the lower end of the outer portion (851). The terminal (851-1) may be coupled to the printed circuit board (50) of the camera device (10A). The terminal (851-1) may be coupled to the printed circuit board (50) of the camera device (10A) by solder.

The substrate (850) may comprise an inner (side) portion (852). The inner portion (852) may be disposed on the OIS-y carrier (410). The inner portion (852) may be fixed to the OIS-y carrier (410). The inner portion (852) may be coupled to the OIS-y carrier (410). The inner portion (852) may be adhered to the OIS-y carrier (410) by an adhesive. The inner portion (852) may move with the OIS-y carrier (410).

The inner portion (852) may comprise a terminal (852-1). The terminal (852-1) may be coupled to the AF coil (520). The terminal (852-1) may be formed on the inner surface of the inner portion (852). The terminal (852-1) may be connected to the AF coil (520) by solder. The substrate (850) may be disposed adjacent to the terminal (852-1) and may comprise an avoidance part preventing interference with one or more of the line of sight and longitudinal line of the AF coil (520).

The substrate (850) may comprise a connecting portion (853). The connecting portion (853) may connect the outer portion (851) and the inner portion (852). The connecting portion (853) may elastically connect the outer portion (851) and the inner portion (852). The connecting portion (853) may connect the inner portion (852) to the outer portion (851) in a manner permitting movement.

The connecting portion (853) may comprise a bent configuration. The connecting portion (853) may be bent once. The connecting portion (853) may be bent a total of one time. As a modified example, the connecting portion (853) may be bent multiple times. The connecting portion (853) may possess ductility. The connecting portion (853) may comprise a curved shape. The connecting portion (853) may be bent. The connecting portion (853) may possess elasticity.

The lens driving device (10) may comprise a ball pressing member. The ball pressing member may comprise a yoke. The yoke may be a "magnetic yoke". The yoke may be a "magnetic member". The yoke may be formed from metal. A magnetic force may be generated between the yoke and the magnet (510, 610, 710). The ball (810, 820, 830) may be pressurized by the magnetic force between the yoke and the magnet (510, 610, 710).

The lens driving device (10) may comprise a magnetic member. The magnetic member may comprise a yoke.

A yoke may comprise multiple yokes. A yoke may comprise three yokes. A yoke may comprise an AF magnetic yoke (910), an OIS-x magnetic yoke (920), and an OIS-y magnetic yoke (930). The AF yoke (910), OIS-x yoke (920), and OIS-y yoke (930) may be spaced apart from one another.

The lens driving device (10) may comprise an AF yoke (910). The AF yoke (910) may be disposed on the OIS-y moving part (400). The AF yoke (910) may be disposed on the substrate (850). The AF yoke (910) may be disposed on the outer surface of the substrate (850). The AF yoke (910) may be disposed on the OIS-y carrier (410). The AF yoke (910) may be coupled to the OIS-y carrier (410). The AF yoke (910) may be fixed to the OIS-y carrier (410). The AF yoke (910) may be adhered to the OIS-y carrier (410) using an adhesive. The AF yoke

(910) may be disposed on the outer side of the OIS-y carrier (410). The AF yoke (910) may be disposed in a location corresponding to the AF magnet (510). The AF yoke (910) may exert a magnetic force on the AF magnet (510). A magnetic force may be generated between the AF yoke (910) and the AF magnet (510). The AF guide ball (810) may be pressurized by the attraction (attractive force) between the AF yoke (910) and the AF magnet (510). The AF guide ball (810) may be pressurized between the AF carrier (210) and the OIS-y carrier (410) by the attractive force between the AF yoke (910) and the AF magnet (510). The AF guide ball (810) may be pressurized between the AF moving part (200) and the OIS-y moving part (400) due to the attractive force between the AF magnet (510) and the AF yoke (910). The AF guide ball (810) may be pressed tightly between the AF moving part (200) and the OIS-y moving part (400).

The lens driving device (10) may comprise an OIS-x magnetic yoke (920). The OIS-x magnetic yoke (920) may be disposed on a fixed part (100). The OIS-x magnetic yoke (920) may be disposed on a base (110). The OIS-x yoke (920) may be coupled to the base (110). The OIS-x yoke (920) may be fixed to the base (110). The OIS-x yoke (920) may be adhered to the base (110) with an adhesive. The OIS-x yoke (920) may be disposed on the substrate (140). The OIS-x yoke (920) may be coupled to the substrate (140). The OIS-x yoke (920) may be secured to the substrate (140). The OIS-x magnetic yoke (920) may be bonded to the substrate (140) using an adhesive. The OIS-x magnetic yoke (920) may be disposed between the base (110) and the substrate (140). The OIS-x magnetic yoke (920) may be disposed within a groove of the base (110).

The OIS-x magnetic yoke (920) may be disposed in a location corresponding to the OIS-x magnet (610). The OIS-x magnetic yoke (920) may exert a magnetic force on the OIS-x magnet (610). An attractive force may be generated between the OIS-x yoke (920) and the OIS-x magnet (610). The OIS-x guide ball (820) may be pressurized by the attractive force between the OIS-x yoke (920) and the OIS-x magnet (610). The OIS-x guide ball (820) may be pressurized between the OIS-x carrier (310) and the base (110) due to the attractive force between the OIS-x attraction yoke (920) and the OIS-x magnet (610). The OIS-x guide ball (820) may be tightly fitted between the OIS-x carrier (310) and the base (110).

The OIS-x attraction yoke (920) may comprise a plurality of yokes. The OIS-x attraction yoke (920) may comprise a plurality of yokes spaced apart from one another. The OIS-x attraction yoke (920) may comprise a first unit yoke (921) and a second unit yoke (922). The first unit yoke (921) may be disposed on the base (110). The second unit yoke (922) may be disposed on the base (110). The first unit yoke (921) may be spaced apart from the second unit yoke (922). The first unit yoke (921) and the second unit yoke (922) may be formed with the same shape. The first unit yoke (921) and the second unit yoke (922) may be formed with the same length. The first unit yoke (921) and the second unit yoke (922) may be disposed in parallel.

The lens driving device (10) may comprise an OIS-y attraction yoke (930). The OIS-y attraction yoke (930) may be disposed on a fixed part (100). The OIS-y attraction yoke (930) may be disposed on a base (110). The OIS-y attraction yoke (930) may be coupled to the base (110). The OIS-y attraction yoke (930) may be fixed to the base (110). The OIS-y attraction yoke (930) may be bonded to the base (110) with an adhesive. The OIS-y attraction yoke (930) may be disposed on the substrate (140). The OIS-y attraction yoke (930) may be coupled to the substrate (140). The OIS-y attraction yoke (930) may be secured to the substrate (140). The OIS-y attraction yoke (930) may be adhesively bonded to the substrate (140). The OIS-y attraction yoke (930) may be disposed between the base (110) and the substrate (140). The OIS-y attraction yoke (930) may be disposed within a groove of the base (110).

The OIS-y attraction yoke (930) may be disposed in correspondence with the OIS-y magnet (710). The OIS-y attraction yoke (930) may exert an attractive force upon the OIS-y magnet (710). An attractive force may be generated between the OIS-y attraction yoke (930) and the OIS-y magnet (710). The OIS-y guide ball (830) may be pressurized by the attractive force between the OIS-y attraction yoke (930) and the OIS-y magnet (710). The OIS-y guide ball (830) may be pressurized between the OIS-y carrier (410) and the OIS-x carrier (310) due to the attraction between the OIS-y attraction yoke (930) and the OIS-y magnet (710). The OIS-y guide ball (830) may be pressed tightly between the OIS-y carrier (410) and the OIS-x carrier (310).

The OIS-y attraction yoke (930) may comprise a plurality of yokes. The OIS-y attraction yoke (930) may comprise a plurality of yokes spaced apart from one another. The OIS-y attraction yoke (930) may comprise a first unit yoke (931) and a second unit yoke (932). The first unit yoke (931) may be disposed on the base (110). The second unit yoke (932) may be disposed on the base (110). The first unit yoke (931) may be spaced apart from the second unit yoke (932). The first unit yoke (931) and the second unit yoke (932) may be formed with the same shape. The first unit yoke (931) and the second unit yoke (932) may be formed with the same length. The first unit yoke (931) and the second unit yoke (932) may be disposed in parallel.

The lens driving device (10) may comprise an additional OIS-y attraction yoke (950). The additional OIS-y attraction yoke (950) may interact attractively with an attraction magnet (955). The additional OIS-y attraction yoke (950) may be disposed in a location corresponding to the attraction magnet (955). The additional OIS-y attraction yoke (950) may be disposed at a location corresponding to the attraction magnet (955) to enable attractive force between the attraction magnet (955) and the additional OIS-y attraction yoke (950). The additional OIS-y attraction yoke (950) may be disposed on the fixed part (100). The additional OIS-y attraction yoke (950) may be disposed on the base (110). The additional OIS-y attraction yoke (950) may be disposed on the substrate (140). The additional OIS-y attraction yoke (950) may be disposed between the substrate (140) and the base (110). The additional OIS-y attraction yoke (950) may pull the attraction magnet (955) downward. Through this, the OIS-y moving part (400) in which the attraction magnet (955) is disposed may be pressed downward.

The lens driving device (10) may comprise the attraction magnet (955). The attraction magnet (955) may be disposed on the OIS-y moving part (400). The attraction magnet (955) may be disposed on the OIS-y carrier (410). The attraction magnet (955) may be disposed on the protrusion (415) of the OIS-y moving part (400). The attraction magnet (955) may overlap with an additional OIS-y attraction yoke (950) in the optical axis direction. The attraction magnet (955) may be disposed at a location corresponding to the additional OIS-y attraction yoke (950). The attraction magnet (955) may be formed to a smaller size than driving magnets (510, 610, 710). The attraction magnet (955) may not overlap with the coil in the optical axis direction. The attraction magnet (955) may be disposed so as not to interact with the coil.

In the modified example, the attraction magnet (955) and the additional OIS-y attraction yoke (950) may be disposed in a reversed positional relationship. That is, the attraction magnet (955) may be disposed on the base (110), and the additional OIS-y attraction yoke (950) may be disposed on the OIS-y carrier (410).

In the present embodiment, the tilt of the OIS-x carrier (310) and the OIS-y carrier (410) can be prevented by the attraction magnet (955) and the additional OIS-y attraction yoke (950). If the attraction magnet (955) and the additional OIS-y attraction yoke (950) are not disposed, the OIS-x carrier (310) may tilt (see FIG. 25c) about an axis defined by a straight line connecting the first region (see FIG. 25a) where the OIS-x carrier (310) contacts the ball and the second region (see FIG. 25b) as its axis of tilt (see FIG. 25c). Furthermore, if the attraction magnet (955) and the additional OIS-y attraction yoke (950) are not disposed, the OIS-y carrier (410) may be tilted (see FIG. 25c) about a line connecting the first region where the OIS-y carrier (410) contacts the ball (see FIG. 25d) and the second region (see FIG. 25e) as its axis of tilt (see FIG. 25f). The attraction magnet (955) and the additional OIS-y attraction yoke (950) may enable at least three-point support between the fixed part and the moving part.

The following describes the autofocus (AF) operation of the lens driving device according to the present embodiment, with reference to the drawings.

FIGS. 28 to 30 are drawings illustrating the autofocus drive (operation) of a lens driving device according to one embodiment of the present invention, where FIG. 28 is a cross-sectional view showing the configuration of an AF moving part in the initial state where no current is applied to an AF coil, FIG. 29 is a cross-sectional view showing the configuration where the AF moving part has moved upwards along the optical axis direction due to a forward current being applied to the AF coil, and FIG. 30 is a cross-sectional view showing the configuration where the AF moving part has moved downwards along the optical axis direction due to a reverse current being applied to the AF coil.

The moving part may be disposed at an initial location where no current is applied to the AF coil (520), spaced apart from both the cover's upper plate (121) and the base (110). At this time, the moving part may be the AF moving part (200).

When a forward current is applied to the AF coil (520), the AF magnet (510) can move in the upward direction along the optical axis due to the electromagnetic interaction between the AF coil (520) and the AF magnet (510) (see FIG. 29A). At this time, the AF carrier (210) may move along with the AF magnet (510) in the upward direction along the optical axis. Furthermore, the lens may move along with the AF carrier (210) in the upward direction along the optical axis. Accordingly, the distance between the lens and the image sensor changes, allowing the focus of the image formed on the image sensor through the lens to be adjusted.

When a reverse current is applied to the AF coil (520), the AF magnet (510) can move in the downward direction along the optical axis due to the electromagnetic interaction between the AF coil (520) and the AF magnet (510) (see FIG. 30B). At this time, the AF carrier (210) may move in the downward direction along the optical axis together with the AF magnet (510). Furthermore, the lens may move in the downward direction along the optical axis together with the AF carrier (210). Consequently, the distance between the lens and the image sensor changes, allowing the focus of the image formed on the image sensor through the lens to be adjusted.

Meanwhile, during the movement of the AF magnet (510), the AF sensor (530) can detect the amount of movement or position of the AF magnet (510) by sensing the strength of the magnetic field of the AF magnet (510). The amount of movement or position of the AF magnet (510) detected by the AF sensor (530) may be used for autofocus feedback control.

Hereinafter, the optical image stabilization (OIS) drive (operation) of the lens driving device according to this embodiment is described with reference to the drawings.

FIGS. 31 to 33 are drawings illustrating an optical image stabilization (handshake correction) drive (operation) of a lens driving device according to one embodiment of the present invention, where FIG. 31 is a cross-sectional view showing the configuration of the moving parts in the initial state where no current is applied to an OIS-x coil and OIS-y coil, FIG. 32 is a cross-sectional view showing the state where current is applied to the OIS-x coil, causing the OIS-x moving part, OIS-y moving part, and AF moving part to move in the x-axis direction perpendicular to the optical axis, and FIG. 33 is a cross-sectional view showing the state where current is applied to the OIS-y coil, causing the OIS-y moving part and AF moving part to move in the y-axis direction perpendicular to the optical axis.

As shown in FIG. 31, the moving part may be disposed at an initial location where no current is applied to the OIS-x coil (620) and the OIS-y coil (720). At this time, the moving part may comprise the OIS-x moving part (300) and the OIS-y moving part (400). Furthermore, the moving part may comprise an AF moving part (200), an OIS-x moving part (300), and an OIS-y moving part (400).

When current is applied to the OIS-x coil (620), the OIS-x magnet (610) may move in the x-axis direction perpendicular to the optical axis due to the electromagnetic interaction between the OIS-x coil (620) and the OIS-x magnet (610) (see FIG. 32A). At this time, the OIS-x carrier (310) may move in the x-axis direction together with the OIS-x magnet (610). Furthermore, the OIS-y carrier (410), AF carrier (210), and lens may move in the x-axis direction together with the OIS-x carrier (310). More specifically, when a forward current is applied to the OIS-x coil (620), the OIS-x magnet (610), OIS-x carrier (310), OIS-y carrier (410), AF carrier (210), and lens can move unidirectionally along the x-axis. Furthermore, when a reverse current is applied to the OIS-x coil (620), the OIS-x magnet (610), OIS-x carrier (310), OIS-y carrier (410), AF carrier (210), and lens may move in the opposite direction along the x-axis.

When current is applied to the OIS-y coil (720), the OIS-y magnet (710) may move in the y-axis direction perpendicular to the optical axis due to the electromagnetic interaction between the OIS-y coil (720) and the OIS-y magnet (710) (see FIG. 33B). At this time, the OIS-y carrier (410) may move in the y-axis direction together with the OIS-y magnet (710). Furthermore, the AF carrier (210) and the lens may move in the y-axis direction together with the OIS-y carrier (410). More specifically, when a forward current is applied to the OIS-y coil (720), the OIS-y magnet (710), OIS-y carrier (410), AF carrier (210), and lens may move unidirectionally along the y-axis. Moreover, when a reverse current is applied to the OIS-y coil (720), the OIS-y magnet (710), OIS-y carrier (410), AF carrier (210), and lens may move in the opposite direction along the y-axis.

Meanwhile, the OIS-x sensor (630) can detect the amount of movement or position of the OIS-x magnet (610) by sensing the strength of the magnetic field of the OIS-x magnet (610). The amount of movement or position of the OIS-x magnet (610) detected by the OIS-x sensor (630) may be used for x-axis direction handshake correction feedback control. The OIS-y sensor (730) can detect the amount of movement or position of the OIS-y magnet (710) by detecting the strength of the magnetic field of the OIS-y magnet (710). The displacement or position of the OIS-y magnet (710) detected by the OIS-y sensor (730) may be used for y-axis direction handshake correction feedback control.

A camera device according to this embodiment is described below with reference to the drawings.

FIG. 34 is an exploded perspective view of the camera device according to this embodiment.

The camera device (10A) may comprise a camera module.

The camera device (10A) may comprise a lens module (20). The lens module (20) may comprise at least one lens. The lens may be disposed in correspondence with the image sensor (60). The lens module (20) may comprise the lens and a barrel. The lens module (20) may be coupled to the AF carrier (210) of the lens driving device (10). The lens module (20) may be coupled to the AF carrier (210) by screw coupling and/or adhesive. The lens module (20) may move integrally with the AF carrier (210).

The camera device (10A) may comprise a filter (30). The filter (30) may serve to block light of a specific frequency band from passing through the lens module (20) and incident onto the image sensor (60). The filter (30) may be disposed parallel to the x-y plane. The filter (30) may be disposed between the lens module (20) and the image sensor (60). The filter (30) may be disposed on the sensor base (40). In a modified example, the filter (30) may be disposed on the base (110). The filter (30) may comprise an infrared filter. The infrared filter may block light in the infrared region from entering the image sensor (60).

The camera device (10A) may comprise a sensor base (40). The sensor base (40) may be disposed between the lens driving device (10) and the printed circuit board (50). The sensor base (40) may comprise a protrusion (41) on which the filter (30) is disposed. An aperture (opening) may be formed in the portion of the sensor base (40) where the filter (30) is disposed, allowing light passing through the filter (30) to be incident upon the image sensor (60). An adhesive member may bond or adhere the base (110) of the lens driving device (10) to the sensor base (40). The adhesive member may additionally serve to prevent the ingress of foreign matter into the interior of the lens driving device (10). The adhesive member may comprise one or more of epoxy, thermosetting adhesive, and UV-curable adhesive.

The camera device (10A) may comprise a printed circuit board (PCB) (50). The printed circuit board (50) may be a substrate or circuit board. The lens driving device (10) may be disposed on the printed circuit board (50). A sensor base (40) may be disposed between the printed circuit board (50) and the lens driving device (10). The printed circuit board (50) may be electrically connected to the lens driving device (10). An image sensor (60) may be disposed on the printed circuit board (50). The printed circuit board (50) may also be equipped with various circuits, components, and control units to convert the image formed on the image sensor (60) into an electrical signal for transmission to an external device.

The camera device (10A) may comprise an image sensor (60). The image sensor (60) may be configured such that light passing through the lens and filter (30) is incident, forming an image. The image sensor (60) may be mounted on a printed circuit board (50). The image sensor (60) may be electrically connected to the printed circuit board (50). For example, the image sensor (60) may be bonded to the printed circuit board (50) using surface mounting technology (SMT). Alternatively, the image sensor (60) may be bonded to the printed circuit board (50) using flip chip technology. The image sensor (60) may be disposed such that its optical axis aligns with that of the lens. That is, the optical axis of the image sensor (60) and the optical axis of the lens may be aligned. The image sensor (60) can convert light incident upon the effective image area of the image sensor (60) into an electrical signal. The image sensor (60) may be any one of a charge-coupled device (CCD), a metal oxide semiconductor (MOS), a charge-plate-detector (CPD), or a charge-injection detector (CID).

The camera device (10A) may comprise a motion sensor (70). The motion sensor (70) may be mounted on the printed circuit board (50). The motion sensor (70) may be electrically connected to the control unit (80) via circuit patterns provided on the printed circuit board (50). The motion sensor (70) may output rotational angular velocity information resulting from the movement of the camera device (10A). The motion sensor (70) may comprise a two-axis or three-axis gyro sensor, or an angular velocity sensor.

The camera device (10A) may comprise a control unit (80). The control unit (80) may be disposed on the printed circuit board (50). The control unit (80) may be electrically connected to the coils (520, 620, 720) and sensors (530, 630, 730) of the lens driving device (10). The control unit (80) may individually control the direction, strength, and amplitude of the current supplied to the coil (330). The control unit (80) may control the lens driving device (10) to perform an auto-focus function and/or an image stabilization function. Furthermore, the control unit (80) may perform auto-focus feedback control and/or image stabilization feedback control for the lens driving device (10).

The camera device (10A) may comprise a connector (90). The connector (90) may be electrically connected to the printed circuit board (50). The connector (90) may comprise a port for electrical connection to an external device.

An optical instrument according to an embodiment of the present invention is described below with reference to the drawings.

FIG. 35 is a perspective view of the optical instrument according to an embodiment of the present invention. FIG. 36 is a perspective view of the optical instrument according to a modified example.

Optical instrument (1) may comprise any one or more of the following: mobile phones, handsets, portable terminals, mobile terminals, smartphones, smart pads, portable smart devices, digital cameras, laptop computers, digital broadcasting terminals, PDAs (Personal Digital Assistants), PMPs (Portable Multimedia Players), and navigation devices. The optical instrument (1) may comprise any device for capturing images or photographs.

The optical instrument (1) may comprise a main body (20). The optical device (1) may comprise a camera device (10A). The camera device (10A) may be disposed within the main body (20). The camera device (10A) may capture subjects. The optical instrument (1) may comprise a display. The display may be disposed on the body (20). The display may output one or more of the images and pictures captured by the camera device (10A). The display may be disposed on a first surface of the body (20). The camera device (10A) may be disposed on one or more of the first surface of the body (20) and a second surface opposite the first surface. As shown in FIG. 35, the camera device (10A) may comprise a triple camera disposed vertically. As shown in FIG. 36, the camera device (10A-1) may comprise a triple camera disposed horizontally.

The embodiments of the present invention have been described with reference to the accompanying drawings, but those skilled in the art to which the invention pertains will understand that the invention may be implemented in other specific forms without altering its technical concept or essential features. Therefore, the embodiments described above should be understood as being illustrative in all respects and not limiting.

## Claims

1. A lens driving device comprising:
a base;
a first carrier disposed on the base;
a second carrier disposed on the first carrier;
a third carrier disposed on the second carrier;
a first driving unit configured to move the first carrier in a first direction perpendicular to an optical axis direction;
a second driving unit configured to move the second carrier in a second direction perpendicular to the optical axis direction and the first direction;
a third driving unit configured to move the third carrier in the optical axis direction;
an attraction magnet disposed on the second carrier; and
a first yoke disposed on the base,
wherein the first yoke is disposed at a position corresponding to the attraction magnet so that an attraction force acts between the first yoke and the attraction magnet, and
wherein the third driving unit comprises a third magnet disposed on the third carrier and a third coil disposed on the second carrier.

2. The lens driving device of claim 1, wherein the first driving unit comprises a first magnet disposed on the first carrier and a first coil interacting with the first magnet,
wherein a second yoke, on which an attractive force acts with the first magnet, is disposed on the base, and
wherein the second yoke comprises a plurality of yokes spaced apart from each other.

3. The lens driving device of claim 1, wherein the second driving unit comprises a second magnet disposed on the second carrier and a second coil interacting with the second magnet,
wherein a third yoke, on which an attractive force acts with the second magnet, is disposed on the base, and
wherein the third yoke comprises a plurality of yokes spaced apart from each other.

4. The lens driving device of claim 1, comprising a substrate connecting the second carrier and the base,
wherein the third coil is disposed on the substrate.

5. The lens driving device of claim 4, wherein the substrate comprises an outer portion disposed on the base, an inner portion disposed on the second carrier, and a connecting portion connecting the outer portion and the inner portion, and
wherein the connecting portion comprises a bent shape.

6. The lens driving device of claim 5, wherein the connecting portion is bent once.

7. The lens driving device of claim 1, wherein the third coil is configured to move together with the second carrier.

8. The lens driving device of claim 1, wherein the first carrier, the second carrier and the third carrier are configured to move together when the first carrier moves in the first direction.

9. The lens driving device of claim 8, wherein the second carrier and the third carrier are configured to move together when the second carrier moves in the second direction, and
wherein a distance between the third magnet and the third coil is maintained when the second carrier moves in the first direction and the second direction.

10. A lens driving device comprising:
a base;
a first carrier disposed on the base;
a second carrier disposed on the first carrier;
a first magnet and a first coil configured to move the first carrier in a first direction perpendicular to an optical axis direction;
a second magnet and a second coil configured to move the second carrier in a second direction perpendicular to the optical direction and the first direction;
a first yoke on which an attractive forces acts with the first magnet; and
a second yoke on which an attractive forces acts with the second magnet,
wherein the first magnet is disposed on the first carrier, and
wherein the first yoke comprises a first-first yoke and a first-second yoke disposed on the base and spaced apart from each other.
